(19) Europäisches Patentamt / European Patent Office / Office européen des brevets

(11) **EP 1 999 191 B1**

(12) **EUROPÄISCHE PATENTSCHRIFT**

(45) Veröffentlichungstag und Bekanntmachung des Hinweises auf die Patenterteilung:
**19.01.2011 Patentblatt 2011/03**

(21) Anmeldenummer: **07726990.0**

(22) Anmeldetag: **16.03.2007**

(51) Int Cl.:
*C08J 3/03* (2006.01)          *C09D 5/00* (2006.01)
*C09D 7/12* (2006.01)          *C09D 133/04* (2006.01)
*C09D 183/04* (2006.01)       *C08K 7/16* (2006.01)

(86) Internationale Anmeldenummer:
**PCT/EP2007/052511**

(87) Internationale Veröffentlichungsnummer:
**WO 2007/113095 (11.10.2007 Gazette 2007/41)**

(54) **PARTIKEL MIT STRUKTURIERTER OBERFLÄCHE**

PARTICLES WITH STRUCTURED SURFACE

PARTICULE A SURFACE STRUCTUREE

(84) Benannte Vertragsstaaten:
**BE DE FR GB**

(30) Priorität: **30.03.2006 DE 102006014875**

(43) Veröffentlichungstag der Anmeldung:
**10.12.2008 Patentblatt 2008/50**

(73) Patentinhaber: **Wacker Chemie AG**
**81737 München (DE)**

(72) Erfinder:
• **SANDMEYER, Frank**
**84508 Burgkirchen (DE)**
• **BARTHEL, Herbert**
**84561 Mehring (DE)**

• **GOTTSCHALK-GAUDIG, Torsten**
**84561 Mehring (DE)**

(74) Vertreter: **Gössmann, Christoph Tassilo et al**
**Wacker-Chemie GmbH**
**Zentralbereich PML,**
**Hanns-Seidel-Platz 4**
**81737 München (DE)**

(56) Entgegenhaltungen:
EP-A1- 0 516 057          JP-A- 9 241 511
US-A- 3 294 725          US-A- 4 618 645
US-A- 5 492 945          US-A- 5 945 471
US-A1- 2002 142 150    US-A1- 2003 021 997

**EP 1 999 191 B1**

## Beschreibung

Es ist bekannt, dass zur Erzielung eines guten Selbstreingungseffektes einer Oberfläche, diese neben einer guten Hydrophobie auch eine mikrorauhe Oberflächenstruktur aufweisen muß. Beide Merkmale sind in der Natur zum Beispiel im Lotusblatt realisiert. Die aus einem hydrophoben Material gebildete Oberfläche weist größere sphärische Erhebungen auf, die wie Noppen beschrieben werden können, welche so nahe beieinander sitzen, dass ein Wassertropfen nicht dazwischen passt und so nur auf den Spitzen der Noppen sitzt. Neben diesen größeren Erhebungen ist sowohl die Oberfläche des übrigen Lotusblattes als auch die Oberfläche der größeren Erhebungen selbst noch einmal durch kleinere Elemente, im Falle des Lotusblattes Wachsteilchen, substrukturiert. Insgesamt ergibt sich so eine Struktur, die aus Erhebungen und Vertiefungen von teilweise weniger als 100 nm bis hin zu 30 μm besteht.

Wasserabweisende Oberflächen mit einer mikrorauhen Struktur mit Erhebungen und Vertiefungen werden in US 3 354 022 beschrieben, wobei hier mit einem hydrophoben Material, insbesondere einem fluorhaltigen Polymer gearbeitet wird. Gemäß einer Ausführungsform kann auf keramische Ziegel oder auf Glas eine Oberfläche mit Selbstreinigungseffekt aufgebracht werden, indem das Substrat mit einer Suspension beschichtet wird, welche Glaskugeln mit einem Durchmesser im Bereich von 3 bis 12 μm und ein Fluorkohlenstoffwachs auf der Basis eines Fluoralkylethoxymethacrylat Polymers enthält. Nachteile derartiger Beschichtungen sind deren geringe Abriebsbeständigkeit und mäßiger Selbstreinigungseffekt.

Die Offenlegungsschrift EP 0 909 747 A1 lehrt ein Verfahren zur Erzeugung einer Selbstreinigungseigenschaft von Oberflächen, insbesondere Dachziegeln. Die Oberfläche weist hydrophobe Erhebungen mit einer Höhe von 5 bis 200 μm auf. Hergestellt wird eine derartige Oberfläche durch Aufbringen einer Dispersion von Pulverpartikeln aus einem inerten Material in einer Siloxan-Lösung und anschließendes Aushärten. Wie im zuvor gewürdigten Verfahren sind die strukturbildenden Partikel nicht abriebstabil auf der Oberfläche des Substrates fixiert.

Das EP Patent 0 772 514 lehrt selbstreinigende Oberflächen von Gegenständen mit einer künstlichen Oberflächenstruktur aus Erhebungen und Vertiefungen, wobei der Abstand zwischen den Erhebungen im Bereich von 5 μm bis 200 μm und die Höhe der Erhebungen im Bereich von 5 μm bis 100 μm liegt und die Struktur aus hydrophoben Polymeren oder haltbar hydrophobierten Materialien besteht. Zur Ausbildung der Struktur eignen sich Ätz- und Prägeverfahren, ferner Beschichtungsverfahren, wie Aufkleben eines hydrophoben Polymeren. Soweit erforderlich schließt sich an die Strukturbildung eine Hydrophobierung, beispielsweise eine Silanisierung an. Die selbstreinigenden, also durch leicht bewegtes Wasser zu reinigenden Oberflächen, wie Beschichtungen von Fahrzeugen, dürfen keinen starken mechanischen Belastungen ausgesetzt werden, da hierdurch die Fähigkeit zur Selbstreinigung verloren geht.

Die DE Anmeldung DE 100 63 739 lehrt Substrate wie Glas, Keramik, Kunststoff und Metall sowie glasierte und emaillierte Substrate mit einer selbstreinigenden Oberfläche. Die selbstreinigende Oberfläche umfasst strukturbildende Partikel mit einem mittleren Durchmesser von weniger als 100 nm, insbesondere weniger als 50 nm aber mindestens 5 nm und ein schichtbildendes Material, wobei es sich hierbei um ein anorganisches oder organisches Material handelt. Die strukturbildenden Partikel sind mittels des schichtbildenden Materials auf dem Substrat fixiert. Ein Teil der Primärpartikel und / oder Agglomerate derselben ragen per se oder mit schichtbildendem Material überzogen zumindest teilweise aus der Oberfläche und bilden auf diese Weise Erhebungen und Vertiefungen im nanoskaligen Bereich. Die strukturierte Oberfläche weist zumindest teilweise eine hydrophobe Beschichtung auf. Zur Herstellung derartiger selbstreinigender Oberflächen wird ein Mittel, das strukturbildende Partikel und ein organisches oder anorganisches schichtbildendes Material enthält, mittels bekannter Beschichtungsverfahren, beispielsweise jenem einer Lackierung, auf das Substrat aufgebracht. Nach dem Ausbilden einer zusammenhängenden und fest haftenden Schicht durch eine thermische Behandlung schießt sich eine Hydrophobierung z.B. unter Verwendung fluorhaltiger Silane und / oder fluorhaltiger Siloxane an. Die Ausbildung der Oberflächenstruktur und die Hydrophobierung erfolgen in diesem Verfahren in getrennten Schritten.

WO 02/064266 beschreibt eine selbstreinigende Lackbeschichtung, umfassend eine Basislackschicht und eine Deckschicht mit einer aus Partikeln gebildeten künstlichen Oberflächenstruktur aus Erhebungen und Vertiefungen, die dadurch gekennzeichnet ist, dass die Partikel einen mittleren Teilchendurchmesser von weniger als 100 nm aufweisen und zumindest teilweise mittels eines Bindemittelsystems in der Deckschicht gebunden sind, die mittlere Höhe und der mittlere Abstand der Erhebungen weniger als 50 nm betragen und die Oberfläche oder Deckschicht zumindest teilweise hydrophob ist. Die offenbarte selbstreinigende Lackbeschichtung weist eine nanoskalige Oberflächenstruktur mit hydrophobem Charakter auf. Da die strukturbildenden Primärpartikel, die einen Durchmesser von < 100 nm, insbesondere < 50 nm bis etwa 5 nm besitzen, auch Agglomerate bilden können, kann die Oberflächenstruktur außer den genannten Erhebungen und Vertiefungen auch eine Überstruktur mit größeren Abständen und Höhen zeigen. Im allgemeinen liegen die mittleren Höhen und Abstände der Erhebungen der Überstruktur noch deutlich unter 1 μm. Bei den strukturgebenden Partikeln kann es sich um organische oder anorganische Materialien handeln.

DE 102 33 829 A1 beschreibt ein Verfahren zur Erzeugung einer Lotusstruktur dadurch, dass die Partikel trocken .durch elektrostatisches Aufsprühen mittels Pulversprühpistole aufgebracht werden.

All diesen Erfindung gemeinsam ist, dass sie entweder eine grobe Struktur mit Strukturelementen im μm-

Bereich beschreiben oder sie befassen sich mit sehr kleinen nanoskaligen Strukturelementen, die entsprechende feine Strukturen ergeben. Eine Kombination aus einer mindestens einige μm großen Struktur, der eine sehr feine nanoskalige Substruktur, mit Strukturelementen, die kleiner als 500 nm sind überlagert ist, ist nicht bekannt. Gerade diese Oberflächenstruktur aus einer Kombination von größeren Strukturelementen, denen eine kleinerdimensionierte Substruktur überlagert ist, ist jedoch das charakteristische der Oberflächenstruktur der Lotusblattoberfläche. Insbesondere liegt diese Feinstruktur beim Lotusblatt sowohl auf der Blattoberfläche vor, die zwischen den größeren Erhebungen liegt, als auch auf den größere Erhebungen, die sie gewissermaßen überzieht. Durch die Kombination von kleineren und größeren Partikeln ist es zwar möglich eine Kombination von kleineren und größeren Erhebungen zu erzeugen, jedoch sammelt sich die kleineren Partikel in den Lücken zwischen den größeren, wodurch sich die Packungsdichte erhöht, und überziehen nicht die größeren Partikel. Dieses technische Prinzip nutzt man aus, um in Beschichtungen die Packungsdichte durch Kombination von großen und kleinen Partikeln zu erhöhen.

Gleichfalls strukturierte Oberflächen mit hydrophoben Eigenschaften lehrt die EP 0 933 388 A2. Die Oberfläche weist Erhebungen mit einer mittleren Höhe von 50 nm bis 10 μm und einen mittleren Abstand zwischen 5.0 nm und 10 μm sowie eine Oberflächenenergie des unstrukturierten Materials von 10 bis 20 mN/m auf. Zur Erzielung einer besonders niedrigen Oberflächenenergie und damit hydrophober und oleophober Eigenschaften weist die strukturierte Oberfläche fluorhaltige Polymere auf oder sie wurde unter Einsatz von Alkylfluorsilanen behandelt.

Eine wie oben beschriebene Kombination aus einer Grobstruktur, die gezielt durch eine Feinstruktur überzogen ist, wird auch hier nicht beschrieben.

EP 0 433 727 A1 beschreibt siliciumbasierende Kern Schale Partikel, bei denen der Kern aus kolloidaler Kieselsäure besteht und die Schale aus Siloxanen oder Siloxankondensaten. Die Partikelgröße liegt zwischen 4 und 400 nm.

US 2003/0044612 A1 beansprucht Kern Hülle Partikel, die einen porösen Kern aus einem organischen Polymer enthalten und eine Hülle aus anorganischem kolloidalem Material, vorzugsweise kolloidaler Kieselsäure.

Es hat sich die Überzeugung gebildet, dass eine gezielte Feinstrukturierung einer grobstrukturierten Oberfläche nur durch die Kombination von feinen Teilchen und größeren Teilchen erreichen läßt, wobei die größeren Teilchen die Feinstruktur, die man durch die kleineren Partikel alleine erreichen kann, bereits fest auf ihrer Oberfläche verankert, mitbringen müssen. Dies deswegen, weil sich durch nachträglichen Auftrag eines Beschichtungsmaterials, das die kleineren Partikel enthält, auf eine grobstrukturierte Oberfläche sich immer zu einem gewissen Grad das oben beschriebene Phänomen einstellt, dass sich die kleineren Teilchen nicht auf den Spitzen der erhabenen Stellen der Oberflächenstruktur anreichern, sondern dazwischen, woraus eine inhomogene Verteilung der feinstrukturgebenden Anteile unvermeidbar ist.

Aufgabe der vorliegenden Erfindung ist es daher Partikel bereitzustellen, die einen Selbstreinigungseffekt der Oberfläche erzielen.

Die gestellte Aufgabe wird durch die vorliegende Erfindung gelöst. Gegenstand der vorliegenden Erfindung sind Partikel nach Anspruch 1.

Die erfindungsgemäßen Partikel enthalten vorzugsweise zumindest ein Polymerisationsprodukt eines polykondensationsfähigen, polyadditionsfähigen oder polymerisierbaren Siloxans, aufgebaut aus Wiederholungseinheiten der allgemeinen Formel(1)

$$[A^1_z R^1_p SiO_{(4-p-z)/2}] \qquad (1),$$

$A^1$ einen Wasserstoff- oder Kohlenwasserstoffrest bedeutet, der bis zu 30 C-Atome enthält und zusätzlich Heteroatome ausgewählt aus O-, S, Si, Cl, F, Br, P oder N-Atomen enthalten kann, so dass $A^1$ auch eine funktionelle Gruppe bedeuten kann, die gegebenenfalls selbst unsubstituiert oder substituiert ist,

$R^1$ Alkoxy- oder Aryloxyreste mit bis zu 18 C-Atomen, Hydroxyreste oder H bedeutet, oder die unabhägig von $A^1$ dessen Bedeutung haben kann,

z und p jeweils die Werte 0, 1, 2 oder 3 bedeuten

oder zumindest ein Polymerisationsprodukt eines polykondensationsfähigen, polyadditionsfähigen oder polymerisierbaren Silans der allgemeinen Formel (2),

$$(R^2)_{4-n} Si (OR^3)_n \, x \qquad (2)$$

wobei n eine Zahl im Wert von 1, 2, 3 der 4 bedeutet,

$R^2$ lineare oder verzweigte Alkylreste mit 1 bis 16 Kohlenstoffatomen, wobei nicht benachbarte Kohlenstoffatome durch Sauerstoffatome ersetzt sein können, Arylreste bedeutet oder ein organofunktioneller Rest ist, ausgewählt aus der Gruppe Phosphonsäuremonoesterrest, Phosphonsäurediesterrest, Phosphonsäurerest, Methacryloyloxyrest, Acryloyloxyrest, Vinylrest, Mercaptorest, Isocyanatorest, wobei der Isocyanatorest gegebenenfalls zum Schutze vor chemischen Reaktionen reaktionsblockiert sein kann, Hydroxyrest, Hydroxyalkylrest, Vinylrest, Epoxyrest, Glycidyloxyrest, Morpholinorest, Piperazinorest, einen primären, sekundären der tertiären Aminorest mit einem oder mehreren Stickstoffatomen, wobei die Stickstoffatome durch Wasserstoff oder einwertige aromatische, aliphatische oder cycloaliphatische Kohlenwasserstoffreste substituiert sein können, Carbonsäurerest, Carbonsäureanhydridrest, Aldehydrest, Urethanrest, Harnstoffrest, wobei der Rest R² unmittelbar am Siliziumatom gebunden sein oder durch eine Kohlenstoffkette von 1 - 6 C-Atomen davon getrennt sein kann, und

R³ einen einwertigen linearen oder verzweigten aliphatischen oder cycloaliphatischen Kohlenwasserstoffrest, in dem nicht benachbarte Kohlenstoffatome durch Heteroatome wie O, N, P, S, Cl, F, Br oder Si ersetzt sein können, wobei die freien Valenzen der betreffenden Heteroatome durch lineare oder verzweigte Alkylreste oder durch Wasserstoffatome abgesättigt sein können oder einen einwertigen aromatischen Kohlenwasserstoffrest oder einen Rest der Form -C(=O)-R3 bedeutet, wobei R3 einen einwertigen linearen oder verzweigten aliphatischen oder einen cycloaliphatischen Kohlenwasserstoffrest oder einen einwertigen aromatischen Kohlenwasserstoffrest bedeutet, wobei das ausgewählte Silan oder gegebenenfalls die ausgewählten Silane in nicht hydrolysierter Form, in hydrolysierter Form oder in hydrolysierter und teilkondensierter oder hydrolysierter und kondensierter Form oder in einem Gemisch dieser Formen vorliegen können,

oder zumindest ein Polymerisationsprodukt einer polykondensationsfähigen, polyadditionsfähigen oder polymerisierbaren Zubereitung, mehrerer solcher Siloxane aus Wiederholungseinheiten der allgemeinen Formel (1) und / oder Silane der Formel (2)

und zumindest einen partikulärem Feststoff, wobei die mittlere Partikelgröße des partikulären Feststoff kleiner als die mittlere Partikelgröße der Polysiloxan-Partikel ohne partikulärem Feststoff ist.

Bevorzugt handelt es sich bei dem erfindungsgemäß eingesetzten partikulären Feststoff silanisierte pyrogene Kieselsäuren mit einer Methanolzahl von kleiner 70.

Dabei ist die mittlere Partikelgröße der feinteiligen Partikel oder gegebenenfalls Aggregate der Partikeln kleiner als die mittlere Partikelgröße der Polymerpartikel enthaltend zumindest ein Polymerisationsprodukt eines polyadditionsfähigen, polykondensationsfähigen oder polymerisierbaren Siloxans und/oder Silans ohne die feinteiligen Partikel.

Die mittlere Partikelgröße der eingesetzten partikulären Feststoffe ist kleiner als 1000 nm, bevorzugt zwischen 10 nm und 800 nm, besonders bevorzugt zwischen 50 nm und 500 nm und ganz besonders bevorzugt zwischen 75 nm und 300 nm, jeweils gemessen als mittleren hydrodynamischen Äquivalentdurchmesser mittels Photonenkorrelationsspektroskopie in 173° Rückstreuung mit eine Nanosizer ZS der Fa. Malver. Die Methanolzahl der eingesetzten partikulären Feststoffe ist kleiner als 70, bevorzugt kleiner als 65 und besonders bevorzugt kleiner als 60.

Bevorzugt ist die Methanolzahl der eingesetzten silanisierten Kieselsäuren kleiner als 70, bevorzugt kleiner als 65 und besonders bevorzugt kleiner als 60.

Zur Bestimmung der Methanolzahl werden definierte Mischungen von Wasser mit Methanol hergestellt, und dann die Oberflächenspannungen dieser Gemische mit bekannten Methoden bestimmt. In einem getrennten Experiment werden diese Wasser-Methanol-Mischungen mit definierten Mengen an Partikeln überschichtet und unter definierten Bedingungen geschüttelt (beispielweise schwaches Schütteln mit der Hand oder mit einem Taumelmischer für ca. 1 Minute). Bestimmt werden das Wasser-Alkohol-Gemisch, bei dem die Partikel eben noch nicht einsinken und das Wasser-Alkohol-Gemisch mit höherem Alkoholgehalt, bei dem die Partikel eben einsinken. Die Oberflächenspannung des letzteren Alkohol-Wasser-Gemisches liefert die kritische Oberflächenenergie $\gamma_{crit}$ als Maß für die Oberflächenenergie $\gamma$ der Partikel. Der Ethanolgehalt in Wasser ergibt die Methanolzahl.

Der Kohlenstoffgehalt der eingesetzten partikulären Feststoffe ist größer als 0 Gew.%, bevorzugt 0,1 - 4 Gew. %, besonders bevorzugt 0,25 - 3,5 Gew.% und ganz besonders bevorzugt 0,5 - 3 Gew.%, gemessen mittels Elementaranalyse an den trockenen partikulären Feststoffen.

Zur Herstellung der erfindungsgemäßen Partikel ist jedes Verfahren geeignet, das mindestens die beiden Schritte umfasst:

1. Herstellung eines Dreiphasengemisches aus einer kontinuierlichen Phase, in der das Siloxan oder Silan nicht löslich oder mit der es nicht mischbar ist und einer diskontinuierlichen Siloxan- bzw. Silanphase, wobei die kontinuierliche von der diskontinuierlichen Siloxan- bzw. Silanphase durch die feinteiligen Metalloxide voneinander getrennt sind, die selbst die dritte Phase bilden.

2. Kondensation oder Polymerisation der diskontinuierlichen Phase, ohne dass die kontinuierliche Phase dadurch verändert wird.

Gegenstand der Erfindung ist ein Verfahren zur Herstellung von Partikeln, dadurch gekennzeichnet, dass eine Ölphase enthaltend zumindest ein polyadditionsfähiges, polykondensationsfähiges oder polymerisierbares Siloxan der allgemeinen Formel(1)

$$[A^1{}_z R^1{}_p SiO_{(4-p-z)/2}] \qquad (1),$$

wobei

$A^1$ einen wasserstoff- oder Kohlenwasserstoffrest bedeutet, der bis zu 30 C-Atome enthält und zusätzlich Heteroatome ausgewählt aus O-, S, Si, Cl, F, Br, P oder N-Atomen enthalten kann, so dass $A^1$ auch eine funktionelle Gruppe bedeuten kann, die gegebenenfalls selbst unsubstituiert oder substituiert ist,

$R^1$ Alkoxy- oder Aryloxyreste mit bis zu 18 C-Atomen, Hydroxyreste oder H bedeutet, oder die unabhängig von $A^1$ dessen Bedeutung haben kann,

z und p jeweils die Werte 0, 1, 2 oder 3 bedeuten

oder zumindest ein polyadditionsfähiges,

polykondensationsfähiges oder polymerisierbares Silan der allgemeinen Formel (2),

$$(R^2)_{4-n}\text{-}Si\text{-}(OR^3)_n \qquad (2)$$

wobei n eine Zahl im Wert von 1, 2, 3 oder 4 bedeutet,

$R^2$ lineare oder verzweigte Alkylreste mit 1 bis 16 Kohlenstoffatomen, wobei nicht benachbarte Kohlenstoffatome durch Sauerstoffatome ersetzt sein können, oder Arylreste bedeutet oder ein organofunktioneller Rest ist, ausgewählt aus der Gruppe Phosphonsäuremonoesterrest, Phosphonsäurediesterrest, Phosphonsäurerest, Methacryloyloxyrest, Acryloyloxyrest, Vinylrest, Mercaptorest, Isocyanatorest, wobei der Isocyanatorest gegebenenfalls zum Schutze vor chemischen Reaktionen reaktionsblockiert sein kann, Hydroxyrest, Hydroxyalkyrest, Vinylrest, Epoxyrest, Glycidyloxyrest, Morpholinorest, Piperazinorest, einen primären, sekundären oder tertiären Aminorest mit einem oder mehreren Stickstoffatomen, wobei die Stickstoffatome durch Wasserstoff oder einwertige aromatische, aliphatische oder cycloaliphatische Kohlenwasserstoffreste substituiert sein können, Carbonsäurerest, Carbonsäureanhydridrest, Aldehydrest, Urethanrest, Harnstoffrest, wobei der Rest $R^2$ unmittelbar am Siliziumatom gebunden sein oder durch eine Kohlenstoffkette von 1 - 6 C-Atomen davon getrennt sein kann, und

$R^1$ einen einwertigen lineraren oder verzweigten aliphatischen oder cycloaliphatischen Kohlenwasserstoffrest, in dem nicht benachbarte Kohlenstoffatome durch Heteroatome wie O, N, P, S, Cl, F, Br oder Si ersetzt sein können, wobei die freien Valenzen der betreffenden Heteroatome durch lineare oder verzweigte Alkylreste oder durch Wasserstoffatome abgesättigt sein können oder einen einwertigen aromatischen Kohlenwasserstoffrest oder einen Rest der Form -C (=O)-$R^3$ bedeutet, wobei $R^3$ einen einwertigen linearen oder verzweigten aliphatischen oder einen cycloaliphatischen Kohlenwasserstoffrest oder einen einwertigen aromatischen Kohlenwasserstoffrest bedeutet, wobei das ausgewählte Silan oder gegebenenfalls die ausgewählten Silane in nicht hydrolysierter Form, in hydrolysierter Form oder in hydrolysierter und teilkondensierter oder hydrolysierter und kondensierter Form oder in einem Gemisch dieser Formen vorliegen können,

oder eine Zubereitung mehrerer solcher Siloxane der allgemeinen Formel (1) und / oder Silane der Formel (2)

mit partikulären Feststoffen im wässrigen Milieu emulgiert werden, wobei der partikuläre Feststoff silylierte pyrogene Kieselsäuren ist.

Typischerweise sind solche Dreiphasengemische Emulsionen von in Wasser nicht löslichen und mit Wasser nicht mischbaren Siloxanen oder Silanen, die mittels teilhydrophobierter Metalloxidpartikel, wie Kieselsäuren in der Wasserphase stabilisiert sind (Pickering Emulsionen). Die polymerisierbaren oder kondensierbaren Silane oder Siloxane werden in einem zur Herstellung der erfindungsgemäßen Partikel geeigneten Verfahren nach dem Emulgieren polymerisiert oder kondensiert. Gegebenenfalls müssen die Siloxane oder Silane vor der Kondensation hydrolysiert werden, wenn es sich dabei beispielsweise um alkoxy- oder acetoxysubstituierte Silanen oder Siloxane handelt. Bei ausreichend reaktiven Silanen und Siloxanen, bewirkt dabei bereits das vorhandene Wasser gegebenenfalls die Hydrolyse und nachfolgend die Kondensation. Bei weniger reaktiven Silanen und Siloxanen sind Katalysatoren erforderlich, die gegebenenfalls die Hydrolyse und die Kondensation der Siloxane und Silane bewirken. Diese Katalysatoren können sowohl Säuren als auch Base sein oder auch Metallkatalysatoren, wie Gruppe IV Übergangsmetallkatalysatoren; Zinnkatalysatoren, etc. wie sie üblicherweise zur Beschleunigung von Hydrolysen, Kondensationsreaktionen oder Umesterungsreaktionen verwendet werden. Als Säuren oder Basen kommen neben den bekannten Mineralsäuren und Metallsalzen auch saure oder basische Silane oder Siloxane in Frage.

Bevorzugte basische Katalysatoren sind NaOH, KOCH, Ammoniak und $NEt_3$.

Bevorzugte saure Katalysatoren sind p-Toluolsulfonsäure, wäßrige oder gasförmige HCl, Schwefelsäure.

Falls das Verfahren eine Polymerisationsreaktion umfasst, kann es sich dabei beispielsweise um eine radikalische Polymerisationreaktion eines olefinisch ungesättigten Siloxans oder Silans handeln.

Das Verfahren ist so auszuführen, dass die die Siloxan- oder Silanphase stabilisierenden feinteiligen partikulären Metalloxide während der Kondensationsreaktion oder der Polymerisationsreaktion mit der Oberfläche der die Kerne bildenden Kondensations- oder Polymerisationsprodukte reagieren oder zumindest eine stabile Wechselwirkung, wie Wasserstoffbrückenbindungen, van der Waals Wechselwirkungen oder eine andere gerichtete Wechselwirkung, bzw. eine Kombination solcher gerichteten Wechselwirkungen eingehen, so dass die die Siloxan- oder Silanphase stabilisierenden feinteiligen partikulären Metalloxide permanent auf den Kernen aus den Kondensationsprodukten oder Polymerisationsprodukten der Siloxane und / oder Silane verankert sind.

Die erfindungsgemäßen Partikel werden entweder durch die Wirkung der eingesetzten Silane oder Siloxane ohne weiteres Zutun automatisch hydrophob oder sie können nachträglich durch Oberflächenbehandlung hydrophobiert werden. Dabei kann die Hülle der Partikel, die aus den die Siloxane oder Silanphase stabilisierenden höchstens teilweise mit Wasser benetzbaren Metalloxiden besteht, zum Beispiel silanisiert werden. Dabei werden in Wasser hydrolysierbare Alkylalkoxysilane eingesetzt, die nach der Hydrolyse auf die die Siloxan- oder Silanphase stabilisierenden partikulären Metalloxide aufkondensieren und diese so hydrophob belegen. Werden solche Silane oder auch entsprechend hydrolysierbare und kondensierbare Siloxane bereits zur Herstellung der polymeren Phase der erfindungsgemäßen Partikel eingesetzt, ist eine nachträgliche Hydrophobierung in der Regel nicht mehr erforderlich. EP 0 941 761 A2 lehrt ein Verfahren zur Mikroverkapselung von Produkten mit Organosiloxanwänden. Dieses Verfahren ist ebenfalls geeignet zur nachträglichen Hydrophobierung der erfindungsgemäßen Partikel. Gegebenenfalls müssen geringe Anpassungen vorgenommen werden, die dem gegenüber den in EP 0 941 761 A2 zu verkapselnden Produkten veränderte Löslichkeits- und Dispergierverhalten der erfindungsgemäßen Partikel Rechnung tagen.

Die Größe der erfindungsgemäßen Partikel lässt sich zum Beispiel durch die Emulgiertechnik, also etwa durch Größen wie die eingetragene Scherenergie, den Volumenanteil der dispersen siliciumorganischen Phase, die Menge der stabilisierenden feinteiligen Metalloxidpartikel, den pH-Wert der kontinuierlichen Wasserphase und deren Ionenstärke, die Viskosität, die Reihenfolge der Dosierung, die Dosiergeschwindigkeit, oder durch die Reaktionsführung steuern, das heißt zum Beispiel durch die Reaktionstemperatur, die Reaktionszeit, die Konzentrationen der eingesetzten Rohstoffe. Die Auswahl und die Menge des gegebenenfalls eingesetzten Hydrolyse- und Kondensationskatalysators hat ebenfalls einen Einfluss auf die Partikelgröße.

Bei Verwendung einer Emulgiertechnik, die die Herstellung kleinerer Tröpfchen erlaubt, gelangt man nach diesem Verfahren zu kleinen oberflächenstrukturierten Partikeln. Hierzu kann man beispielsweise andere Scherenergien oder eine Auswahl anderer amphiphiler Partikel zur Stabilisierung der kondensationsfähigen Flüssigkeit oder Zubereitung in Wasser verwenden. Man kann entsprechende erfindungsgemäße Partikel auch unter Verwendung von kondensationsfähigen oder polymerisierbaren Emulgatoren anstelle von Partikeln gewinnen, wobei man die Emulgatoren nachträglich oder gleichzeitig zur Kondensation der kondensationsfähigen Flüssigkeit oder. Zubereitung kondensiert oder polymerisiert und so die Hülle erzeugt.

Zur Herstellung der partikelstabilisierten Pickering Emulsion können sämtliche dem Fachmann bekannten Methoden zur Herstellung von Emulsionen eingesetzt werden. Es zeigte sich jedoch, daß sich besonders gut geeignete Emulsionen zur Erzeugung der erfindungsgemäßen Partikel gemäß der folgenden Verfahren erhalten lassen:

Verfahren 1:

- Vorlegen einer gegebenenfalls hochkonzentrierten Partikeldispersion in dem Medium, das später die homogene Phase darstellt, wobei das vorgelegte Volumen so bemessen ist, dass es die Gesamtmenge an benötigten feinteiligen Metalloxidpartikeln enthält.
- Langsames Zudosieren des Gesamtvolumens an disperser Phase unter ständigem Homogenisieren z.B. mittels eines schnelllaufenden Rührers, schnelllaufenden Dissolvers oder eines Rotor-Stator-Systems.
- Gegebenenfalls anschließend langsames Zudosieren des gewünschten Restvolumens an reiner homogener Phase, gegebenenfalls unter ständigem Homogenisieren z.B. mittels eines schnelllaufenden Rührers, schnelllaufenden Dissolvers oder eines Rotor-Stator-Systems.

Verfahren 2:

- Vorlegen des Gesamtvolumens an disperser Phase.
- Langsames Zudosieren einer gegebenenfalls hochkonzentrierten Partikeldispersion in dem Medium, das später die homogene Phase darstellt, unter ständigem Homogenisieren z.B. mittels eines schnelllaufenden Rührers, schnelllaufenden Dissolvers oder eines Rotor-Stator-Systems, wobei das zudosierte Volumen so bemessen ist, dass es die Gesamtmenge an benötigten feinteiligen Metalloxidpartikeln enthält.
- Gegebenenfalls anschließend langsames Zudosieren des gewünschten Restvolumens an reiner homogener Phase gegebenenfalls unter ständigem Homogenisieren z.B. mittels eines schnelllaufenden Rührers, schnelllaufenden Dissolvers oder eines Rotor-Stator-Systems

Verfahren 3:

- Vorlegen des Gesamtvolumens an disperser Phase.
- Langsames Zudosieren einer Gegebenenfalls hochkonzentrierten Partikeldispersion in dem Medium, das später die homogene Phase darstellt, unter ständigem Homogenisieren z.B. mittels eines schnelllaufenden Rührers, schnelllaufenden Dissolvers oder eines Rotor-Stator-Systems, wobei das zudosierte Volumen so bemessen ist, dass es die Gesamtmenge an benötigten feinteiligen Metalloxidpartikeln und homogener Phase enthält.

Verfahren 4:

- Vorlegen der gegebenenfalls hochkonzentrierten Partikeldispersion in dem Medium, das später die homogene Phase darstellt, wobei das zudosierte Volumen so bemessen ist, dass es die Gesamtmenge an benötigten feinteiligen Metalloxidpartikelnund homogener Phase enthält. Langsames Zudosieren des Gesamtvolumens an disperser Phase unter ständigem Homogenisieren z.B. mittels eines schnelllaufenden Rührers, schnelllaufenden Dissolvers, eines Rotor-Stator-Systems oder mittels Kapillaremulgators.

Verfahren 5:

- vorlegen der gegebenenfalls hochkonzentrierten Partikeldispersion in dem Medium, das später die homogene Phase darstellt, wobei das zudosierte Volumen so bemessen ist, dass es die Gesamtmenge an benötigten höchstens teilweise mit Wasser benetzbaren Metalloxidpartikeln und homogener Phase enthält und des Gesamtvolumens an disperser Phase.
- Gemeinsames Homogenisieren z.B. mittels eines schnelllaufenden Rührers, schnelllaufenden Dissolvers oder eines Rotor-Stator-Systems.

Bevorzugt sind Verfahren 1 und 2, besonders bevorzugt ist Verfahren 1.

Die beschriebenen Verfahren können sowohl in kontinuierlicher als auch in diskontinuierlicher Form durchgeführt werden. Bevorzugt ist die kontinuierliche Form.

Die Temperatur der flüssigen Phase während des Emulgierprozesses liegt zwischen 0 °C und 80 °C, bevorzugt zwischen 10 °C und 50 °C, besonders bevorzugt zwischen 20 °C und 40 °C.

Der Emulgierprozess kann bei Normaldruck, also bei 900 bis 1100 hPa, bei erhöhtem Druck oder im Vakuum durchgeführt werden. Bevorzugt ist der Prozess bei Normaldruck.

Die Herstellung der feindispersen Dispersion der feinteiligen Partikel in der Flüssigkeit, die in der erfindungsgemäßen Emulsion die homogene Phase bildet, kann dabei grundsätzlich gemäß den bekannten Verfahren zur Herstellung von Partikeldispersionen erfolgen, wie das Einarbeiten mittels Rührorganen mit hoher Scherwirkung wie schnelllaufende Rührer, schnelllaufende Dissolver, Rotor-Stator-Systeme, Ultraschalldispergatoren oder Kugel- bzw. Perlmühlen.

Die Konzentration der feinteiligen Metalloxidpartikel in der Dispersion beträgt dabei zwischen 1 und 80 Gew. %, bevorzugt zwischen 10 und 60 Gew.%, besonders bevorzugt zwischen 10 und 40 Gew.% und ganz besonders bevorzugt zwischen 12 und 30 Gew.%.

Ausgehend von der oben beschriebenen partikelstabilisierten Emulsion lassen sich die erfindungsgemäßen Partikel gemäß folgender Verfahren erhalten:

Die oben beschriebene partikelstabilisierte Pickering-Emulsion mit einem Massenanteil der Ölphase von 0,1 Gew.% bis 80 Gew.%, bevorzugt 10 Gew.% bis 75 Gew.%, besonders bevorzugt von 15 Gew.% bis 60 Gew.% und in einer speziellen Ausführungsform von 20 Gew.% bis 50 Gew.% und einem Massenanteil der feinteiligen Metalloxidpartikel von 0,1 Gew.% bis 20 Gew.%, bevorzugt 0,5 Gew.% bis 15 Gew.% und besonders bevorzugt von 1 Gew.% bis 10 Gew. % und einem Massenanteil von Wasser von 10 Gew.% bis 99,8 Gew.% wird unter geringer Scherwirkung beispielsweise mittels eines langsam laufenden Dissolvers, Rotor-Stators oder Balkenrührers bis zur vollständigen inneren Vernetzung der erfindungsgemäßen Partikel gerührt oder mittels geeigneter Aggregate geschüttelt.

Die Dauer dieses Verfahrensschritts ist vorzugsweise kürzer als 120 h, bevorzugt liegt sie zwischen 0 h bis 48 h., besonders bevorzugt 0,1 h bis 24 h und in einer speziellen Ausführung 0,25 h bis 12 h.

Gegebenenfalls können der Reaktionsmischung die Vernetzung beschleunigende und vervollständigende Katalysatoren wie eben genannt zugesetzt werden. Die Zugabe kann dabei vor der Herstellung der Pickering-Emulsion direkt in die Ölphase oder Wasserphase, während der Emulgierung oder nachträglich in die fertige Pickering-Emulsion erfolgen.

Die Einsatzmenge der gegebenenfalls zugesetzten Katalysatoren liegt dabei in dem für Katalysatoren typischen Mengenbereich.

Die Reaktionstemperatur während der Rührphase liegt zwischen 0 °C und 150 °C, bevorzugt zwischen 10°C und 80 °C und besonders bevorzugt zwischen 15°C und 60 °C.

Gegebenenfalls kann die Reaktion unter einer Inertgas-Atmosphäre wie Stickstoff, Argon oder Kohlendioxid durchgeführt werden. Der Sauerstoffanteil ist dann kleiner 15 Vol.%, bevorzugt kleiner 10 Vol.% und besonders bevorzugt kleiner 5 Vol.%.

Der pH-Wert der Reaktionsmischung liegt zwischen pH 10 und 1, bevorzugt zwischen pH 9 und 2, besonders bevorzugt zwischen pH 7 und 2 und in einer speziellen Ausführung zwischen pH 6 und 2,5.

Gegebenenfalls können der Dispersion der erfindungsgemäßen Partikel wasserlösliche organische Lösungsmittel wie Alkohole wie Methanol, Ethanol oder i-Propanol oder Ketone wie Aceton oder MEK oder Ether wie THF oder andere zugesetzt werden. Diese können entweder unmittelbar nach Abschluß der Herstellung der Pickering-Emulsion, während der Reaktionsphase oder nach Abschluß der Reaktionsphase zugesetzt werden.

Gegebenenfalls können der Dispersion der erfindungsgemäßen Partikel Dispergierhilfsmittel, Schutzkolloide, Tenside oder ähnliches zugesetzt werden. Diese können entweder unmittelbar nach Abschluß der Herstellung der Pickering-Emulsion, während der Reaktionsphase oder nach Abschluß der Reaktionsphase zugesetzt werden.

Bevorzugt enthält die Dispersion der erfindungsgemäßen Partikel weniger als 5 Gew.% Dispergierhilfsmittel, Schutzkolloide, Tenside oder ähnliches, besonders bevorzugt enthält die Dspersion der erfindungsgemäßen Partikel weniger als 1 Gew.% Dispergierhilfsmittel, Schutzkolloide, Tenside oder ähnliches, ganz besonders bevorzugt enthält die Dispersion der erfindungsgemäßen Partikel weniger als 0,1 Gew.% Dispergierhilfsmittel, Schutzkolloide, Tenside oder ähnliches und in einer speziellen Ausführung ist die Dispersion der erfindungsgemäßen Partikel frei von Dispergiertrilfsmitteln, Schutzkolloiden, Tensiden oder ähnlichem.

Gegebenenfalls können der Dispersion der erfindungsgemäßen Partikel anorganische oder organische Elektrolyte zugesetzt werden. Diese können entweder unmittelbar nach Abschuß der Herstellung der Pickering-Emulsion, während der Reaktionsphase oder nach Abschluß der Reaktionsphase zugesetzt werden. Die Ionenstärke der Dispersion liegt dabei zwischen 0,01 mmol/l und 1 mol/l, bevorzugt zwischen 0,1 mmol/l und 500 mmol/l und besonders bevorzugt zwischen 0,5 mmol/l und 100 mmol/l.

Gegebenenfalls können der Dispersion der erfindungsgemäßen Partikel zusätzliche Hydrophobiermittel wie Silane oder Siloxane wie oben beschrieben zugesetzt werden. Diese können entweder unmittelbar nach Abschluß der Herstellung der Pickering-Emulsion, während der Reaktionsphase oder nach Abschluß der Reaktionsphase zugesetzt werden.

Der Feststoffanteil der erfindungsgemäßen Partikel in der Dispersion bestehend aus der Summe der eingesetzten partikulären Feststoffe und der vernetzten Polymerphase liegt zwischen 0,1 Gew.% und 99 Gew.%, bevorzugt zwischen 5 Gew.% und 90 Gew.% und besonders bevorzugt zwischen 10 Gew.% und 80 Gew.%.

Gegebenenfalls kann die Dispersion nach Abschluß der Reaktionsphase weiterhin unter Rühren gelagert werden. Dies kann beispielsweise mittels Balken- oder Ankerrührer erfolgen.

Gegebenenfalls können die erfindungsgemäßen Partikel in Pulverform aus der Dispersion isoliert werden. Dies kann beispielsweise mittels Filtration, Sedimentation, Zentrifugieren oder durch Entfernen der flüchtigen Bestandteil durch Trocknen in Öfen oder Trocknern oder durch Sprühtrocknung oder durch Anlegen eines entsprechenden Vakuums erfolgen.

Bevorzugt ist sprühtrocknen.

Die erfindungsgemäßen Partikel sind insbesondere dadurch gekennzeichnet, daß sie einen mittleren Partikeldurchmesser $x_{50}$ von 0,5 bis 500 $\mu$m, bevorzugt 0,8 bis 100 $\mu$m und besonders bevorzugt von 1 bis 50 $\mu$m aufweisen, gemessen mittels Laserbeugung nach Fraunhofer mit einem Laserbeugungsgerät Helos / BF der Fa. Sympatec in Küvettenmeßtechnik.

Die erfindungsgemäßen Partikel sind insbesondere dadurch gekennzeichnet, daß sie hydrophob sind. Dies bedeutet, daß die isolierten getrockneten Partikel eine Methanolzahl von größer 20, bevorzugt 30 bis 99, besonders bevorzugt von 40 bis 95 aufweisen.

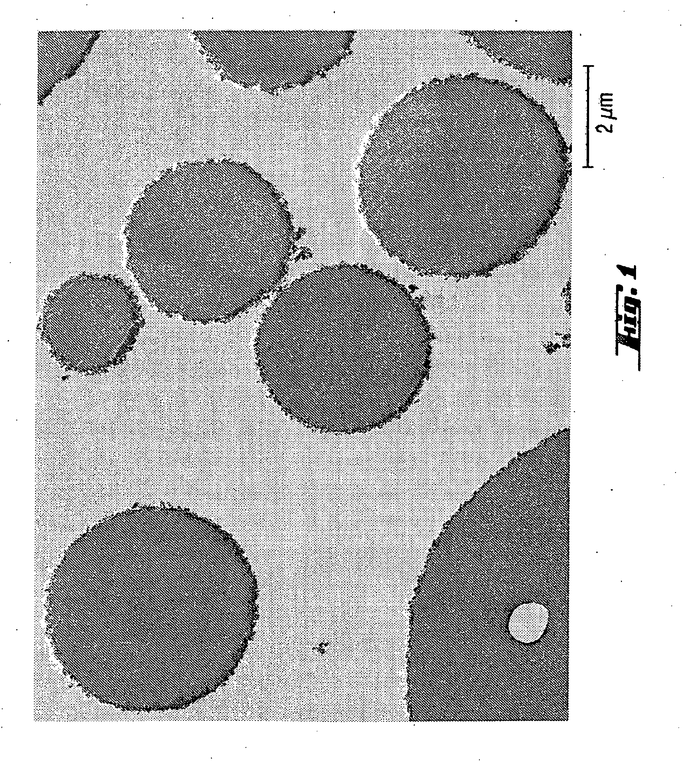

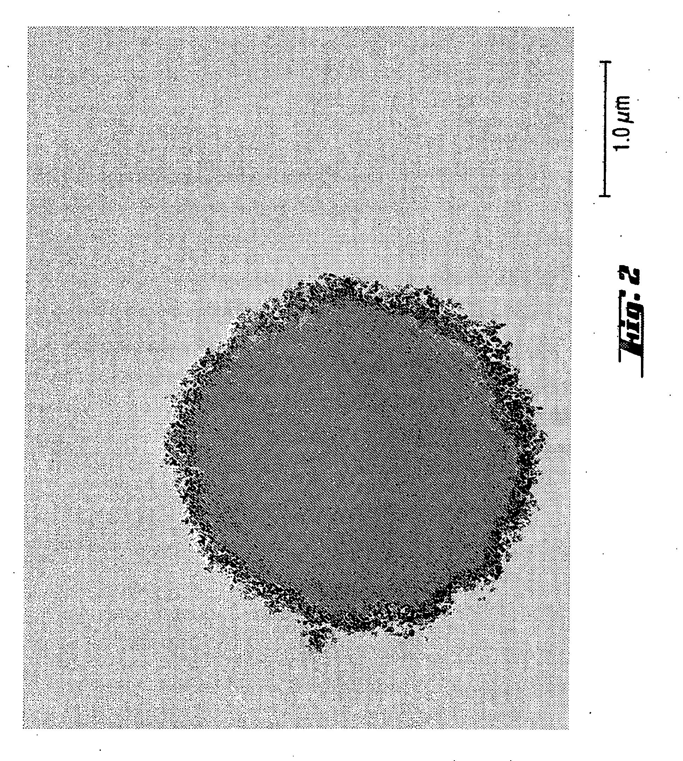

Die erfindungsgemäßen Partikel sind insbesondere dadurch gekennzeichnet, daß die mittlere Partikelgröße der eingesetzten feinteiligen partikulären Feststoffe kleiner als die mittlere Partikelgröße der Polymer-Partikel ohne partikulärem Feststoff ist. Der mittlere Partikeldurchmesser der Polymer-Partikel $d_{poly}$ ohne partikulärem Feststoff läßt sich aus TEM-Aufnahmen (s. Figur 1 und 2) von Dünnschliffen von eingebetteten erfindungsgemäßen Partikeln erhalten. Der Quotient aus dem mittleren Partikeldurchmesser der Polymer-Partikel $d_{poly}$ ohne partikulärem Feststoff und dem hydrodynamischen Äquivalentdurchmesser $d_{part}$ der eingesetzten partikulären Feststoffe $d_{poly}/d_{part}$ ist größer als 1, bevorzugt zwischen 1,5 und 7000, besonders bevorzugt zwischen 2,5 und 1500.

Die erfindungsgemäßen Partikel sind insbesondere dadurch gekennzeichnet, dass die eingesetzten partikulären Feststoffe im wesentlich an der Oberfläche der Polymer-Partikel gebunden sind. Die Verteilung der eingesetzten partikulären Feststoffe läßt sich aus TEM-Aufnahmen von Dünnschliffen von eingebetteten erfindungsgemäßen Partikeln erhalten (s. Figur 1 und 2),

Bevorzugt sind die eingesetzten partikulären Feststoffe an der Oberfläche der Polymer-Partikel chemisch gebunden, beispielsweise durch chemische Reaktion der siliciumorganischen polymeren Bestandteil der erfindungsgemäßen Partikel mit Oberflächen-OH-Gruppen der eingesetzten partikulären Feststoffe. Die chemische Reaktion zwischen den siliciumorganischen polymeren Bestandteilen der erfindungsgemäßen Partikel und den Oberflächen-OH-Gruppen der eingesetzten partikulären Feststoffe läßt sich beispielsweise mittels Festkörper-NMR-Spektroskopie nachweisen.

Die erfindungsgemäßen Partikel sind insbesondere dadurch gekennzeichnet, daß sie eine mikrostrukturierte Oberfläche aufweisen. Dabei ist der gemittelte Quotient aus dem Durchmesser der erfindungsgemäßen Partikel und der Dicke der strukturierten Oberflächenschicht, jeweils erhalten aus elektronenmikroskopischen Aufnahmen wie TEM oder REM größer 1, bevorzugt liegt der Quotient zwischen 2,5 und 10000, besonders bevorzugt zwischen 3 und 5000 und in einer speziellen Ausführung zwischen 3 und 2000 (s. Figur 1 und 2). Insbesondere ist der mittlere Oberflächenstrukturparameter $<D_{Part}/d_1>$ größer als 1, bevorzugt zwischen 2,5 und 10000, besonders bevorzugt zwischen 3 und 5000 und in einer speziellen Ausführung zwischen 3 und 2000. Der mittlere Oberflächenstrukturparameter $<D_{part}/d_1>$ wird aus TEM-Aufnahmen von Dünnschliffen von in Kunstharz eingebetteten Partikeln bestimmt. Dabei wird von 50 zufällig herausgesuchten Partikeln der Durchmesser des Gesamtpartikels $D_{part}$ und die Gesamtdicke der strukturierten Oberflächenschicht $d_1$ gemessen. Der mittlere Oberflächenstrukturparameter $<D_{pen}/d_1>$ ergibt sich dann aus

$$\langle D_{Part}/d_1 \rangle = \frac{\sum_{i=1}^{i=50}(D_{Part}/d_1)_i}{50}.$$

Die erfindungsgemäßen Partikel sind insbesondere dadurch gekennzeichnet, daß sie eine nicht-glatte Oberfläche aufweisen. Dies bedeutet, das die fraktale Dimension der Oberfläche $D_s$ vorzugsweise größer 2, besonders.bevorzugt 2,1 bis 3,0 ist, wobei die fraktale Dimension der Oberfläche $D_s$ hierbei definiert ist als:

Partikel-Oberfläche A ist proportional zum Partikel-Radius R hoch $D_s$. Die fraktale Dimension der Masse läßt sich erhalten aus einer doppelt logarithmischen Auftragung des Streuvektors Q gegen die Intensität I(Q), erhalten aus Kleinwinkelstreuexperimenten.

Die erfindungsgemäßen Partikel werden vorzugsweise in Beschichtungsstoffen oder Imprägniermitteln verwendet, um Oberflächenstrukturen auf den Substraten zu erzeugen, auf die die Beschichtungsstoffe aufgetragen werden. Dabei bieten die erfindungsgemäßen Partikel im Gegensatz zu den Partikeln gemäß Stand.der Technik, die Möglichkeit Erhebungen zu erzeugen, die eine zusätzliche auf ihrer Oberfläche fest verankerte Substruktur besitzen.

Um eine feste Verankerung der Partikel auf der Oberfläche zu gewährleisten, wird vorzugsweise mindestens ein organisches oder ein anorganisches Bindemittel oder eine Kombination von Bindemitteln in solchen Zubereitungen mitverwendet. Die genaue Höhe einer Erhebung, die durch einen erfindungsgemäßen Partikel erzeugt wird, ergibt sich näherungsweise als Differenz der Schichtstärke, die der Film aus dem Bindemittelfilm auf der Oberfläche erzeugt und dem Partikeldurchmesser des jeweils eingesetzten erfindungsgemäßen Partikels. Diese Näherung ist um so genauer, je exakter der erfindungsgemäße Partikel auf dem Substrat selbst aufliegt und nicht auf anderen mitverwendeten Hilfsstoffen. In letzterem Fall trägt die Höhe des Hilfsstoffes, auf dem der Partikel aufliegt, zur Höhe der Erhebung mit bei.

Sollen die Oberflächenbeschichtungsmittel, die unter Verwendung der erfindungsgemäßen Partikel hergestellt werden, eine sogenannte Lotusstruktur ergeben, so enthalten sie noch weitere sphärische Partikel, die eine Größe von 50 nm bis 500 nm aufweisen und hydrophob sind. Als solche Artikel kommen alle kolloidalen hydrophoben Partikel aus anorganischem, z.B. oxidischem oder organischem, z.B. polymerem Material in Frage, die die entsprechende Partikelgröße aufweisen. Beispiele für solche Partikel sind Kieselsäuren, wie pyrogene Kieselsäure, Fällungskieselsäure oder Kieselgel, die eine hydrophoben Oberflächenbelegung aufweisen, kondensierte und agglomerierte Siliconharzpartikel oder im allgemeinen die bereits oben erwähnten die die Siloxane oder Silanphase stabilisierenden feinteiligen Metalloxide.

Zur Herstellung einer sogenannten Lotusstruktur, bei der man die Oberflächenstruktur der erfindungsgemäßen Partikel nutzt, ist bei der Auswahl der Art und der Menge des eingesetzten Bindemittels darauf zu achten, dass die erfindungsgemäßen Partikel nicht völlig von dem Bindemittelfilm eingehüllt werden und nach außen nicht mehr ein Erscheinung treten. Sie können dann zwar eine Verstärkung des Filmes bewirkten und seine meachanische Festigkeit verbessern, jedoch tragen sie nur noch untergeordnet, wenn überhaupt zu Oberflächeneffekten bei. Um eine Kombination aus Oberflächenaktivität der Partikel und mechanischer Belastbarkeit, d.h. Abriebfestigkeit der erzeugten Oberflächenschichten zu erreichen, sind Technologien empfehlenswert, wie sie zum Beispiel zur Herstellung von Schleifpapier verwendet werden. Auch dort übertragen die Partikel die Bindemittelschicht und sind dennoch abriebfest in ihr verankert. Um eine solche abriebfeste Oberflächenstruktur zu erreichen, hat es sich als vorteilhaft erwiesen, die Bindemittelmenge so zu bemessen, dass die erfindungsgemäßen Partikel zu 33% bis 66% aus dem Bindemittelfilm herausragen. Da die mitzuverwendenden Partikel, die eine Feinstruktur zwischen den erfindungsgemäßen Partikeln bilden, kleiner sind als die erfindungsgemäßen Partikel, sind diese so auszuwählen, dass sie selbst im Bindemittel aufschwimmen und in der Oberfläche fixiert sind, oder es sind geeignete Additive zu wählen, wie Netz- oder Dispergiermittel, die die Verträglichkeit und das Ausschwimmverhalten der mitverwendeten kleineren Partikel so zu gestalten helfen, dass sie an die Oberfläche ausschwimmen. Typische einsetzbare Bindemittel sind vorzugweise monomere, oligomere und polymere Acrylate, Methacrylate und Copolymere, die Acrylat- und oder Methacrylatanteile enthalten, oligomere und polymere Epoxide, oligomere und polymere Polyurethane, gesättigte und ungesättigte (Poly)-Ether und (Poly)-Ester, aromatische aliphatische und cycloaliphatische Polyolefine, Polyvinylbutyrale, Polyvinylalkohole, Polyamide, Polyimide, Polycarbonate, Polyaminoamide, phosphon- und sulfonsäurehaltige Polymere, organisch funktionalisierte organische Polymere und Copolymere, die carbonsäurefunktionell, hydroxyfunktionell, tri-, di- und monoaminofunktionell, epoxyfunktionell, mercaptofunktionell, anhydridfunktionell oder gemischt organisch funktionalisiert sein können, polymere Phosphorsäureester, Phenolformaldehydkondensationsprodukte, melaminhaltige Copolymere, Siliconharze, Siliconelastomere, Alkali- und Erdalkalisiliconate, Alkali- und Erdalkaliwassergläser, reaktive, vernetzbare Siliconöle, reaktive, vernetzbare Silane, jeweils in reiner Form oder als Zubereitung in Lösemitteln oder in wässriger Phase als Emulsion, Dispersion oder Lösung, sowie Kombinationen derselben erhalten durch Mischen und / oder Copolymerisieren, Cokondensieren oder Polyaddieren, respektive durch

Copolymerisation, Cokondensation oder Polyaddition der monomeren Einheiten aus denen sie aufgebaut sind. Gegenstand der Erfindung sind auch Oberflächenbeschichtung, Formkörper, Fasermaterialien oder textile Flächengebilde, wobei diese eine Hydrophobie, mit einen Kontaktwinkel gemessen in Luft gegen Wasser von größer als 90°, aufweisen.

Die Verwendung der erfindungsgemäßen Partikel in Beschichtungsmitteln, Imprägniermitteln und anderen Oberflächenbehandlungsmitteln zur Erhöhung der Hydrophobie und zur Verringerung der Verschmutzungsanfälligkeit list ebenfalls Gegenstand der Erfindung.

Außer zum Zwecke der Herstellung strukturierter Oberflächen können die erfindungsgemäßen Partikel verwendet werden zum Zwecke des Korrosionsschutzes auf Metallen und zur Manipulation von weiteren Eigenschaften von Zubereitungen, die die erfindungsgemäßen Partikel enthalten, oder von Festkörpern oder Filmen, die aus Zubereitungen erhalten werden, die die erfindungsgemäßen Partikel enthalten weiter dienen sie z.B. zur :

- Steuerung der elektrischen Leitfähigkeit und des elektrischen Widerstandes
- Steuerung der Verlaufseigenschaften einer Zubereitung
- Steuerung des Glanzes eines feuchten oder gehärteten Filmes oder eines Objektes
- Verringerung der Verschmutzungsneigung
- Erhöhung der Bewitterungsbeständigkeit
- Erhöhung der Chemikalienresistenz
- Erhöhung der Farbtonetabilität
- Reduzierung der Kreidungsneigung
- Reduzierung oder Erhöhung der Haft- und Gleitreibung auf Festkörpern oder Filmen erhalten aus Zubereitungen, die erfindungsgemäße Partikel enthalten
- Stabilisierung oder Destabilisierung von Schaum in der Zubereitung, die die erfindungsgemäßen Partikel enthalten
- Verbesserung der Haftung von Zubereitungen, die die erfindungsgemäßen Partikel enthalten, zu Substraten auf oder zwischen die die Zubereitungen, die die erfindungsgemäßen Partikel enthalten, aufgetragen werden,
- Steuerung des Füllstoff- und Pigmentnetz- und - Dispergierverhaltens,
- Steuerung der rheologischen Eigenschaften der Zubereitung, die die erfindungsgemäßen Partikel enthält,
- Steuerung der mechanischen Eigenschaften, wie z.B. Flexibilität, Kratzfestigkeit, Elastizität, Dehnbarkeit, Biegefähigkeit, Reißverhalten, Rückprallverhalten, Härte, Dichte, Weiterreißfestigkeit, Druckverformungsrest, Verhalten bei verschiedenen Temperaturen, Ausdehnungskoeffizient, Abriebfestigkeit sowie weiterer Eigenschaften wie der Wärmeleitfähigkeit, Brennbarkeit, Gasdurchlässigkeit, Beständigkeit gegen Wasserdampf, Heißluft, Chemikalien, Bewitterung und Strahlung, der Sterilisierbarkeit, von Festkörpern oder Filmen erhältlich aus Zubereitungen, die die erfindungsgemäßen Partikel enthalten
- Steuerung der elektrischen Eigenschaften, wie z.B. dielektrischer Verlustfaktor, Durchschlagfestigkeit, Dielektrizitätskonstante, Kriechstromfestigkeit, Lichtbogenbeständigkeit, Oberflächenwiderstand, spezifischer Durchschlagswiderstand,
- Flexibilität, Kratzfestigkeit, Elastizität, Dehnbarkeit, Biegefähigkeit, Reißverhalten, Rückprallverhalten, Härte, Dichte, Weiterreibfestigkeit, Druckverformungsrest, Verhalten bei verschiedenen Temperaturen von Festkörpern oder Filmen erhältlich aus Zubereitungen, die die erfindungsgemäßen Partikel enthalten.

Beispiele für Anwendungen, in denen die erfindungsgemäßen Partikel eingesetzt werden können, um die oben bezeichneten Eigenschaften zu manipulieren, sind die Herstellung von Reinigungsmitteln, Polituren sowie Beschichtungsstoffen und Imprägnierungen und daraus zu erhaltende Beschichtungen und Überzüge auf Substraten, wie Metall, Glas, Holz, mineralische Substrat, Kunst- und Naturfasern zur Herstellung von Textilien, Teppichen, Bodenbelägen, oder sonstigen aus Fasern herstellbaren Gütern, Leder, Kunstleder, Kunststoffe wie Folien, Formteilen.

Beispiele für natürliche Fasermaterialien sind Wolle, Baumwolle, Seide, Flachs und Fasern aus regenerierter Zellulose.

Beispiele für synthetische Fasermaterialien sind Polyester, Polyamid, Polyacrylnitril, Polyethylen, Polypropylen und Polyurethan.

Beispiele für anorganische Fasermaterialien sind Glas- und Kohlefasern.

Zusammensetzungen, die die erfindungsgemäßen Partikel enthalten, können auf die Fasern an sich oder auf daraus hergestellte Garne und textile Flächengebilde aufgetragen werden.

Textile Flächengebilde, die mit Zusammensetzungen, enthaltend die erfindungsgemäßen Partikel, behandelt werden können, sind beispielsweise Gewebe, Gestrickte, Gewirke, Gelege, Geflechte, Nähwirkwaren und Vliesstoffe.

Das Auftragen von Zusammensetzungen, enthaltend die erfindungsgemäßen Partikel mit strukturierter Oberfläche, auf die zu beschichtenden Substrate bzw. zu imprägnierenden Substrate bzw. deren Oberflächen kann in beliebiger für die Herstellung von Beschichtungen bzw. Imprägnierungen aus flüssigen Stoffen geeigneter und vielfach bekannter Weise erfolgen, beispielsweise durch Tauchen, Streichen, Gießen, sprühern, Aufwalzen, Drucken, z.B. mittels einer Offsetgravur-Überzugsvorrichtung, Messer- oder Rakel-Beschichtung oder mittels einer Luftbürste.

Die Einbringung in synthetische Fasermaterialien kann durch Einextrudieren der erfindungsgemäßen Partikel oder eines Masterbatchs bestehend aus den erfindungsgemäßen Partikeln und dem Fasermaterial erfolgen. Ebenso können die erfindungsgemäßen Partikel mit strukturierter Oberfläche in die Hülle von Bikomponentenfasern eingebracht werden. Die Faserpolymere von Kern und Hülle können dabei von gleicher oder verschiedener Natur sein.

Die erfindungsgemäßen Partikel können in Zubereitungen bei entsprechender Auswahl der Zubereitungskomponenten außerdem als Additiv zum Zwecke der Entschäumung, der Verlaufsförderung, Hydrophobierung, Hydrophilierung, Füllstoff- und Pigmentdispergierung, Füllstoff- und Pigmentbenetzung, Substratbenetzung, Förderung der Oberflächenglätte, Reduzierung des Haft- und Gleitwiderstandes auf der Oberfläche der aus der additivierten Zubereitung erhältlichen ausgehärteten Masse eingesetzt werden. Die erfindungsgemäßen Partikel können in Elastomermassen eingearbeitet werden. Hierbei können sie zum Zwecke der Verstärkung oder zur Verbesserung anderer Gebrauchseigenschaften, wie der Steuerung der Transparenz, der Hitzebeständigkeit, der Vergilbungsneigung, der Bewitterungsbeständigkeit eingesetzt werden.

Mögliche Einsatzgebiete der neuen Zubereitung sind: Beschichtungen von textilen Flächengebilden wie z.B. Gewebe, Vliese, Gestricke, Gelege, Filze, Wirkware oder Kettwirkware.

Die textilen Flächengebilde könne gefertigt sein aus Naturfasern, wie Baumwolle, Wolle, Seide etc. oder auch aus Kunstfasern wie Polyester, Polyamid, Aramid etc. Auch aus Mineralfasern wie Glas oder Silicaten oder Metallfasern können die Textilien gefertigt sein.

Die mit den die erfindungsgemäßen Partikel enthaltenden Masse beschichteten textilen Flächengebilde könne für technische Anwendungen wie z.B. Förderbänder, Kompensatoren, Schutzkleidung, Markisen, Isolationsbereich oder Airbags eingesetzt werden.

Aber auch zur Anwendung im Hochleistungstextilbereich, wie Gleitschirme, Heißluftballons, Fallschirme, Outdoorkleidung, Sporttextilien, Freizeitkleidung, Freizeitartikel wie Zelte oder Rucksäcke, Segel und Streetwear können die mit den die erfindungsgemäßen Partikel enthaltenden Massen verwendet werden.

Auch zum Beschichten von Folien oder Oberflächen aus mineralischen Stoffen, Kunststoffen, Naturstoffen oder Metallen können die beschriebenen Produkte verwendet werden.

Weiterhin können die beschriebenen Massen zur Herstellung von Formartikeln verwendet werden.

Des Weiteren können viele Substrate, wie beispielsweise Papier, mineralische Baustoffe, Kunststoffe, Holz und vielen anderen Unterlagen mit den erfindungsgemäßen Formulierungen behandelt werden.

Das Aufbringen der derart hergestellten erfindungsgemäßen Formulierungen auf textile Materialien erfolgt durch in der Textilveredelungsindustrie gängige Verfahren, wie Pflatschen, Tauchen mit oder ohne anschließendem Foulard, Rakeln oder Beschichten durch Walzenauftrag, Siebdruck, Pinseln oder Rasterwalzen, Extrusionsverfahren, Spritz - oder Sprühverfahren, oder in anderer beliebiger Art und Weise aufgebracht werden. Auch alle Arten von Rollenbeschichtungen, wie Gravurwalzen, Pflatschen oder Auftrag über Mehrwalzensysteme sind möglich;

Die beschriebenen Massen eignen sich auch zum Laminieren und zur Verarbeitung im Transferverfahren.

Formartikel können im Spritzguß oder Gießverfahren hergestellt werden.

Das Trocknen und Vulkanisieren erfolgt in üblichen Wärmekanälen, die durch Heißluft oder Infrarotstrahlung oder andere Energiequellen temperiert werden können. Der bevorzugte Temperaturbereich ist 50 - 200°C. Da einige Textilarten nicht besonders temperaturbeständig sind, wird die obere Temperaturgrenze meist durch die Temperaturbeständigkeit des Textils limitiert. Die Verweilzeit im Trockenofen ist von des Temperatur im Wärmekanal abhängig und ist bevorzugt 0,5 bis 30 Minuten.

Gewebe aus Glasfasern fransen an den Schnittstellen sehr stark aus, ein Ausfransen der Schnittkanten wird durch die Behandlung verhindert. Glasstaub, der durch den Bruch der feinen Glasfasern entsteht, wird durch eine Ausrüstung mit der erfindungsgemäßen Formulierung fixiert. Des Weiteren zeigt ein derartig ausgerüstetes Glasgewebe elastische Eigenschaften.

**Figuren**

In den Figuren 1 und 2 sind Aufnahmen der erfindungsgemäßen Partikel mittels Transmissions-Elektronenmikroskopie zu sehen.

**Beispiele**

**1. Beispiel**

a) Herstellung einer wässrigen Kieselsäuredispersion

300 g einer teilhydrophoben pyrogenen Kieselsäure mit einem Restsilanolgehalt von 71% und einem Kohlenstoffgehalt von 0,95%, erhalten durch Umsetzung einer hydrophilen Ausgangskieselsäure mit einer spezifische BET-Oberfläche von 200 $m^2$/g (erhältlich unter der Bezeichnung HDK® N20 bei der Wacker-Chemie GmbH, München) mit Dimethyldichlorsilan gemäß EP 1433749 A1, werden portionsweise an einem Dissolver bei 300 - 600 rpm in 1000 g vollentsalztes (VE-)Wasser eingerührt. Dabei wird der pH-Wert der Dispersion durch Zudosieren von wässriger NaOH in einem Bereich von 9 - 9,5 gehalten. Nach vollständiger Zugabe der Kieselsäure wird noch 30 min bei 6000 rpm nachdispergiert. Die erhaltene niedrigviskos Dispersion wird anschließend bei einer Durchflußrate von 5-10 ml/min durch eine Ultraschalldurchflußzelle (Fa. Hielscher; 24 kHz; 400 W) gepumpt. Es resultiert eine dünnflüssige Kieselsäuredispersion.

b) Herstellung einer Pickering Emulsion

100 g der in Beispiel 1a) beschriebene Kieselsäuredispersion mit einem Feststoffgehalt von 23 Gew.% werden in einem 1000 ml Edelstahlbecher vorgelegt. Durch Zusatz von wässriger HCl wird ein pH-Wert von ca. 4 eingestellt. Zu der nun höherviskosen Suspension werden unter Rühren bei 10000 rpm mit einem Ultraturrax und Wasserkühlung über einen Zeitraum von ca. 15 min langsam 300g eines methoxygruppenhaltiges oligomeres Kondensationsprodukt aus Methyltrimethoxysilan mit einem Molekulargewicht von Mw = 1200 und einem Methoxygruppengehalt von ca. 30 Gewichtsprozent zudosiert. Dabei sollte die Temperatur der Mischung nicht über 60 °C steigen. Zu dieser nun hochviskosen standfesten Masse werden anschließend 220 g VE-Wasser ebenfalls bei 10000 rpm über einen Zeitraum von 5 min zugegeben. Dabei sollte die Temperatur der Mischung nicht über 60 °C steigen. Es resultiert eine dünnflüssige weiße O/W-Emulsion.

c) Herstellung der erfindungsgemäßen Partikel

Zu 500 g der unter Beispiel 1b) beschriebenen Pickering-Emulsion werden unter Rühren 3 g p-Toluolsulfonsäure gegeben. Die Reaktionsmischung wird bei 1000 rpm für 3 h und einer Temperatur von 50 - 60 °C mittels Dissolver (Fa. Getzmann) gerührt. Es resultiert eine weiße dünnflüssige Dispersion, deren analytische Daten in Tabelle 1 zusammengefasst sind.

Tabelle 1:

| Feststoffgehalt | x50-Wert | Methanolzahl | $<D_{Part}/d_1>$ |
|---|---|---|---|
| 50 wt% | 9,23 $\mu$m | 53 | 8,5 |

- Feststoffgehalt: 10 g wässrige Dispersion werden in einer Porzellanschale mit der gleichen Menge Ethanol versetzt und in einem $N_2$-gespülten Trockenschrank bei 150 °C zur Gewichtskonstanz eingedampft. Die Masse $m_s$ des trockenen Rückstandes ergibt den Feststoffgehalt gemäß Feststoffgehalt / % = $m_s$ * 100 / 10 g.

- mittl. Partikeldurchmesser (x50-Wert) : Bestimmung des d50-Werts mittels Laserbeugung und Auswertung der Meßergebnisse nach Fraunhofer-Theorie an einem Helos / BF der Fa. Sympatec in Küvettenmeßtechnik.

- Methanolzahl: Zur Bestimmung der Methanolzahl werden definierte Mischungen von Wasser mit Methanol hergestellt. In einem getrennten Experiment werden diese Wasser-Methanol-Mischungen mit definierten Mengen an getrockneten Partikeln überschichtet und unter definierten Bedingungen geschüttelt (beispielweise schwaches Schütteln mit der Hand oder mit einem Taumelmischer für ca. 1 Minute). Bestimmt werden das Wasser-Alkohol-Gemisch, bei dem die Partikel eben noch nicht einsinken und das Wasser-Alkohol-Gemisch mit höherem Alkoholgehalt, bei dem die Partikel eben einsinken. Letzterer Ethanolgehalt in Wasser ergibt die Methanolzahl.

- mittlerer Oberflächenstrukturparameter $<D_{Part}/d_1>$: Aus TEM-Aufnahmen von Dünnschliffen von in Kunstharz eingebetteten Partikeln wird von 50 zufällig herausgesuchten Partikeln der Durchmesser des Gesamtpartikels $D_{Part}$ und die Gesamtdicke der strukturierten Oberflächenschicht $d_1$ bestimmt. Der mittlerer Oberflächenstrukturparameter $<D_{Part}/d_1>$ ergibt sich dann aus

$$\langle D_{Part}/d_1 \rangle = \frac{\sum_{i=1}^{i=50}(D_{Part}/d_1)_i}{50} \ .$$

## 2. Anwendungsbeispiele

### 2.1. Herstellung von Zubereitungen zum Imprägnieren und Beschichten, die die erfindungsgemäßen Partikel enthalten.

a) eine 20 gewichtsprozentige wässrige Dispersion erfindunsgemäßer Partikel, hergestellt nach der Vorgehensweise wie sie in Beispiel 1 beschrieben ist, wird in einem, Edelstahlbecher vorgelegt. Unter Rühren mit einem Dissolver (4500 Umdrehungen pro Minute) wird eine 20 gewichtsprozentige wässrige Dispersion eines carboxyfunktionellen und mit Ammoniak neutralisierten Polyacrylates zugegeben. Das Polyacrylat ist so eingestellt, dass es selbstemulgierend ist, wobei zur Erhöhung der Dispersionsstabilität 0,2 Gewichtsprozent bezogen auf Festgehalt Natriumdodecylsulfonat zugegeben wurde. Die Partikelgröße des Polyacrylates wurde auf unter 100 nm eingestellt. Unmittelbar nach Zugabe der Polyacrylatdispersion steigt die Viskosität stark an. Um eine dünnflüssige durch Rakeln applizierbare Zubereitung zu erhalten, wird mit Wasser auf eine verarbeitbare Viskosität verdünnt. Der gesamte Vorgang dauert 20 Minuten. Während der gesamten Zeit wird bei konstanter Geschwindigkeit mit dem Dissolver gerührt. Die Mengenverhältnisse an Partikeldispersion und Polyacrylatdispersion werden so gewählt, dass auf 1 Teil Festkörper der Polyacrylatdispersion 5 Teile Festkörper der Partikeldispersion kommen.

b) Es wird analog zu Beispiel a) verfahren, wobei nun das Verhältnis von Partikeldispersion zu Polyacrylatdispersion nun so gewählt wird, dass auf 1 Teil Festkörper der Polyacrylatdispersion 6 Teile Festkörper der Partikeldispersion kommen.

c) Es wird analog zu Beispiel a) verfahren, wobei nun das Verhältnis von Partikeldispersion zu Polyacrylatdispersion nun so gewählt wird, dass auf 1 Teil Festkörper der Polyacrylatdispersion 7 Teile Festkörper der Partikeldispersion kommen

d) Es wird analog zu Beispiel a) verfahren, wobei nun das Verhältnis von Partikeldispersion zu Polya-crylatdispersion nun so gewählt wird, dass auf 1 Teil Festkörper der Polyacrylatdispersion 8 Teile Festkörper der Partikeldispersion kommen.

e) eine 20 gewichtsprozentige wässrige Dispersion erfindungsgemäßer Partikel, hergestellt nach der Vorgehensweise wie sie in Beispiel 1 beschrieben ist, wird in einem Edelstahlbecher vorgelegt. Unter Rühren mit einem Dissolver (4500 Umdrehungen pro Minute) wird eine 50 gewichtsprozentige Emulsion eines Methylsiliconharzes zugegeben, das hergestellt wurde aus 100 Teilen Methyltrichlosilan und 15 Teilen Dimethyldichlorsilan durch ethanolische Hydrolyse und nachfolgende Kondensation, wobei das Methylsiliconharz ein Molekulargewichtsmittel Mw von 6500 aufweist, 6% Ethoxygruppen und 1% Hydroxygruppen trägt. Bei der Vermischung tritt keine Viskositätserhöhung auf. Der gesamte Vorgang dauert 15 Minuten. Während der gesamten Zeit wird bei konstanter Geschwindigkeit mit dem Dissolver gerührt. Die Mengenverhältnisse an Partikeldispersion und Siliconharzemulsion werden so gewählt, dass auf 1 Teil Festkörper der Siliconharzemulsion 5 Teile Festkörper der Partikeldispersion kommen.

f) Eine 20 gewichtsprozentige wässrige Dispersion erfindungsgemäßer Partikel, hergestellt nach der Vorgehensweise wie sie in Beispiel 1 beschrieben ist, wird in eine Edelstahlbecher vorgelegt. Unter Rühren mit einem Dissolver (4500 Umdrehungen pro Minute) wird eine 31 gewichtsprozentige Emulsion eines alpha omega hydroxyfunktionellen Polydimethylsiloxans mit einer Viskosität von 80000 mPas bei 25°C und Hilfsstoffen (erhältlich durch eine 1:1 Verdünnung von Finish CT 27 E der Wacker Chemie GmbH mit Wasser) zugegeben. Es wird keine Erhöhung der Viskosität beobachtet. Der gesamte Vorgang dauert 15 Minuten. Während der gesamten Zeit wird bei konstanter Geschwindigkeit mit dem Dissolver gerührt. Die Mengenverhältnisse an Partikeldispersion und Polydimethylsiloxanemulsion werden so gewählt, dass auf 1 Teil Festkörper der Polydimethylsiloxanemulsion 5 Teile Festkörper der Partikeldispersion kommen.

g) Aus der Polyacrylatdispersion aus Beispiel a) -d) und der 30 gewichtsprozentigen Polydimethylsiloxanemulsion aus Beispiel g) wird eine Mischung hergestellt, indem die beiden Zubereitungen unter Rühren 1:1 vermengt werden. Eine 20 gewichtsprozentige wässrige Dispersion erfindungsgemäßer Partikel, hergestellt nach der Vorgehensweise wie sie in Beispiel 1 beschrieben ist, wird in einem Edelstahlbecher vorgelegt. Unter Rühren mit einem Dissolver (4500 Umdrehungen pro Minute) wird die Bindemittelmischung zugegeben. Man beobachtet einen Anstieg der Viskosität, so dass Wasser zugegeben wird, bis eine rakelbare-Viskosität erhalten wird. Der gesamte Vorgang dauert 25 Minuten. Während der gesamten Zeit wird bei konstanter Geschwindigkeit mit dem Dissolver gerührt. Die Mengenverhältnisse an Partikeldispersion und Mischung aus Polyacrylatdispersion und Polydimethylsiloxanemulsion werden so gewählt, dass auf 1 Teil Festkörper der Mischung 5 Teile Festkörper der Partikeldispersion kommen.

**Anmerkung:** Bei allen Zubereitungen tritt nach geringer Zeit eine mehr oder weniger stark ausgeprägte Verdickung ein. Durch Rühren erhält man aus den verdickten Proben wieder dünnflüssige Mischungen. Die Zubereitungen zeigen Thixotropie.

### 2.2. Auftragen der Zubereitungen aus 2.1. und Feststellung der Randwinkel.

a) Imprägnierungen von mineralischen Substraten und Beschichtungen auf Glas:

Die Zubereitungen aus den Beispielen 2.1. a) - g) werden mittels eines 20 $\mu$m Spiralrakels auf jeweils einen Kalksandstein, eine Faserzementplatte und eine Glasplatte appliziert. Die Trockung erfolgt vier Stunden bei 23°C, 60% relativer Luftfeuchte. Auf der Glasplatte werden die Trockenschichtdicken bestimmt. Sie liegen zwischen 5 und 8 $\mu$m je nach Konzentration der jeweiligen Zubereitung. Anhang der Aufzüge auf Glasplatten werden Randsainkelmessungen durchgeführt. Folgende Werte werden erhalten:

| Probe | Schichdicke, trocknen | Randwinkel (Wassertropfen) |
|-------|----------------------|----------------------------|
| 2.1.a | 6 $\mu$m | 123° |
| 2.1.b | 5 $\mu$m | 126° |
| 2.1.c | 6 $\mu$m | 128° |
| 2.1.d | 6 $\mu$m | 131° |
| 2.1.e | 8 $\mu$m | 122° |
| 2.1.f | 8 $\mu$m | 123° |
| 2.1.g | 7 $\mu$m | 123° |

Im Gegensatz zu den Aufzügen auf Glas, dringen die Bindemittel der Zubereitungen a) - g) im Wesentlichen in das Substrat ein, wie Imprägniermittel, wenn sie auf die mineralischen. Oberflächen des Kalksandstein- und der Faserzementplatten aufgetragen werden. Man kann die Partikellage auf der Oberfläche durch eine leichte weißliche Verfärbung identifizieren. Ein Kreidungstest der imprägnierten Proben nach ASTM D 4214 erbracht keine Kreidung bei den Beispielen a) - c) und e) - g) und leichte Kreidung bei Beispiel d). Der Test wurde sowohl mit den Kalksandstein- als auch den Faserzementplatten durchgeführt. Die imprägnierten Oberflächen sind also mechanisch stabil, die erfindungsgemäßen Partikel aus den Zubereitungen liegen nicht lose auf der Oberfläche, sondern an selbiger gebunden.

Auf die im Winkel von 45° schräg gestellten Kalksandstein- und die Faserzementplatten wurde lotrecht Wasser aufgeträufelt. Das Wasser perlt an der Oberfläche ab. Eine Benetzung wird nicht beobachtet.

Im Gegensatz dazu wird mit der Polyacrylatdispersion aus den Beispielen a) - d), der Siliconharzemulsion aus Beispiel e), der Polydimethylsiloxanemulsion aus Beispiel f) sowie der Mischung aus Beispiel g) eine Benetzung der frisch imprägnierten und getrockneten mineralischen Oberflächen beobachtet.

## Patentansprüche

1. Partikel enthaltend zumindest ein Polymerisationsprodukt eines polyadditionsfähigen, polykondensationsfähigen oder polymerisierbaren Siloxans und/oder Silans und einen partikulären Feststoff, wobei der partikuläre Feststoff silylierte pyrogene Kieselsäure ist, wobei die mittlere Partikelgröße des partikulären Feststoffes kleiner als die mittlere Partikelgröße der Polymer-Partikel ohne partikulären Feststoff ist und der partikuläre Feststoff an der Oberfläche der Polymer-Partikel gebunden ist.

2. Partikel nach Anspruch 1, **dadurch gekennzeichnet, dass** sie zumindest ein Polymerisationsprodukt eines polyadditionsfähigen, polykondensationsfähigen oder polymerisierbaren Siloxans, aufgebaut aus Wiederholungseinheiten der allgemeinen Formel(1)

$$[A^1{}_zR^1{}_pSiO_{(4-p-z)/2}] \qquad (1),$$

wobei

**A$^1$** einen Wasserstoff- oder Kohlenwasserstoffrest bedeutet, der bis zu 30 C-Atome enthält und zusätzlich Heteroatome ausgewählt aus O-, S, Si, Cl, F, Br, P oder N-Atomen enthalten kann, so dass **A$^1$** auch eine funktionelle Gruppe bedeuten kann, die gegebenenfalls selbst unsubstituiert oder substituiert ist,

**R$^1$** Alkoxy- oder Aryloxyreste mit bis zu 18 C-Atomen, Hydroxyreste oder H bedeutet, oder die unabhängig von **A$^1$** dessen Bedeutung haben können,

**z** und **p** jeweils die Werte 0, 1, 2 oder 3 bedeuten

oder aus dem Polyadditionsprodukt, Kondensationsprodukt oder dem Polymerisationsprodukt eines polyadditionsfähigen, kondensationsfähigen oder polymerisierbaren Silans der allgemeinen Formel (2) besteht,

$$(R^2)_{4-n}Si(OR^3)_n \qquad (2)$$

wobei n eine Zahl im Wert von 1, 2, 3 oder 4 bedeutet,

R$^2$ lineare oder verzweigte Alkylreste mit 1 bis 16 Kohlenstoffatomen, wobei nicht benachbarte Kohlenstoffatome durch Sauerstoffatome ersetzt sein können oder Arylreste bedeutet oder ein organofunktioneller Rest ist, ausgewählt aus der Gruppe phosphonsäuremonoesterrest, Phosphonsäurediesterrest, Phosphonsäurerest, Methacryloyloxyrest, Acryloyloxyrest, Vinylrest, Mercaptorest, Isocyanatorest, wobei der Isocyanatorest gegebenenfalls zum Schutze vor chemischen Reaktionen reaktionsblockiert sein kann, Hydroxyrest, Hydroxyalkyrest, Vinylrest, Epoxyrest, Glycidyloxyrest, Morpholinorest, Piperazinorest, einen primären, sekundären oder tertiären Aminorest mit einem oder mehreren Stickstoffatomen, wobei die Stickstoffatome durch Wasserstoff oder einwertige aromatische, aliphatische oder cycloaliphatische Kohlenwasserstoffreste substituiert sein können, Carbonsäurerest, Carbonsäureanhydridrest, Aldehydrest, Urethanrest, Harnstoffrest, wobei der Rest R$^2$ unmittelbar am siliziumatom gebunden sein oder durch eine Kohlenstoffkette von 1 - 6 C-Atomen davon getrennt sein kann, und R$^3$ einen einwertigen lineraren oder verzweigten aliphatischen oder cycloaliphatischen Kohlenwasserstoffrest, in dem nicht benachbarte Kohlenstoffatome durch Heteroatome wie O, N, P, S, Cl, F, Br oder Si ersetzt sein können, wobei die freien Valenzen der betreffenden Heteroatome durch lineare oder

verzweigte Alkylreste oder durch Wasserstoff atome abgesättigt sein können oder einen einwertigen aromatischen Kohlenwasserstoffrest oder einen Rest der Form -C(=O)-R$^3$ bedeutet, wobei R$^3$ einen einwertigen lineraren oder verzweigten aliphatischen oder einen cycloaliphatischen Kohlenwasserstoffrest oder einen einwertigen aromatischen Kohlenwasserstoffrest bedeutet, wobei das ausgewählte Silan oder gegebenenfalls die ausgewählten Silane in nicht hydrolysierter Form, in hydrolysierter Form oder in hydrolysierter und teilkondensierter oder hydrolysierter und kondensierter Form oder in einem Gemisch dieser Formen vorliegen können,

oder das Polyadditions-, Kondensations- oder Polymerisationsprodukt einer Zubereitung, mehrerer solcher Siloxane aus Wiederholungseinheiten der allgemeinen Formel (1) und / oder Silanen der Formel (2) aufweist, sind.

3.  Partikel nach Anspruch 2, **dadurch gekennzeichnet, dass** die Wiederholungseinheiten der allgemeinen Formel (1) solche sind, die mindestens 1 Gewichtsprozent, jedoch nicht mehr als 60 Gewichtsprozent Reste R$^1$ enthalten.

4.  Partikel nach Anspruch 2, **dadurch gekennzeichnet dass**, R$^1$ einen Methoxyrest oder Ethoxyrest bedeutet.

5.  Partikel nach Anspruch 1, **dadurch gekennzeichnet dass**, das Silan ein Alkylalkoxysilan ist.

6.  Partikel nach Anspruch 5, **dadurch gekennzeichnet dass**, das Alkylalkoxysilan ein Alkylalkoxysilane mit 1, 2 oder 3 Alkoxygruppen, wobei die Alkylgruppen lineare oder verzweigte C1 - C18 Alkylreste sind.

7.  Partikel nach Anspruch 6, **dadurch gekennzeichnet dass**, der Alkylrest ein Methyl, Ethyl, n-Propyl oder Isooctylreste und der Alkoxyrest ein Methoxy- oder Ethoxyreste ist.

8.  Partikel nach Anspruch 1, **dadurch gekennzeichnet, dass** die silylierte pyrogene Kieselsäuren eine Methanolzahl von kleiner 70 aufweisen.

9.  Partikel nach einem oder mehreren der Ansprüche 1 bis 8, **dadurch gekennzeichnet, dass** die Partikel einen mittleren Durchmesser von 0,5 $\mu$m bis 500 $\mu$m aufweisen.

10. Verfahren zur Herstellung von Partikeln, **dadurch gekennzeichnet, dass** eine Ölphase enthaltend zumindest ein polyadditionsfähiges, polykondensationsfähiges oder polymerisierbares Siloxan der allgemeinen Formel(1)

$$[A^1_z R^1_p SiO_{(4-p-z)/2}] \qquad (1),$$

wobei

$A^1$ einen Wasserstoff- oder Kohlenwasserstoffrest bedeutet, der bis zu 30 C-Atome enthält und zusätzlich Heteroatome ausgewählt aus O-, S, Si, Cl, F, Br, P oder N-Atomen enthalten kann, so dass $A^1$ auch eine funktionelle Gruppe bedeuten kann, die gegebenenfalls selbst unsubstituiert oder substituiert ist,

$R^1$ Alkoxy- oder Aryloxyreste mit bis zu 18 C-Atomen, Hydroxyreste oder H bedeutet, oder die unabhägig von $A^1$ dessen Bedeutung haben kann,

z und p jeweils die Werte 0, 1, 2 oder 3 bedeuten

oder zumindest ein polyadditionsfähiges, polykondensationsfähiges oder polymerisierbares Silan der allgemeinen Formel (2),

$$(R^2)_{4-n}\text{-Si-} (OR^3)_n \qquad (2)$$

wobei n eine Zahl im Wert von 1, 2, 3 oder 4 bedeutet,

$R^2$ lineare oder verzweigte Alkylreste mit 1 bis 16 Kohlenstoffatomen, wobei nicht benachbarte Kohlenstoffatome durch Sauerstoffatome ersetzt sein können oder Arylreste bedeutet oder ein organofunktioneller Rest ist, ausgewählt aus der Gruppe Phosphonsäuremonoesterrest, Phosphonsäurediesterrest, Phosphonsäurerest, Methacryloyloxyrest, Acryloyloxyrest, Vinylrest, Mercaptorest, Isocyanatorest, wobei der Isocyanatorest gegebenenfalls zum Schutze vor chemischen Reaktionen reaktionsblockiert sein kann, Hydroxyrest, Hydroxyalkyrest, Vinylrest, Epoxyrest, clycidyloxyrest, Morpholinorest, Piperazinorest, einen primären, sekundären oder tertiären Aminorest mit einem oder mehreren Stickstoffatomen, wobei die Stickstoffatome durch Wasserstoff oder einwertige aromatische, aliphatische oder cycloaliphatische Kohlenwasserstoffreste substituiert sein können, Carbonsäurerest, Carbonsäureanhydridrest, Aldehydrest, Urethanrest, Harnstoffrest, wobei der Rest $R^2$ unmittelbar am siliziumatom gebunden sein oder durch eine Kohlenstoffkette von 1 - 6 C-Atomen davon getrennt sein kann, und

$R^3$ einen einwertigen lineraren oder verzweigten aliphatischen oder cycloaliphatischen Kohlenwasserstoffrest, in dem nicht benachbarte Kohlenstoffatome durch Heteroatome wie O, N, P, S, Cl, F, Br oder Si ersetzt sein können, wobei die freien Valenzen der betreffenden Heteroatome durch lineare oder verzweigte Alkylreste oder durch Wasserstoffatome abgesättigt sein können oder einen einwertigen aromatischen Kohlenwasserstoffrest oder einen Rest der Form -C(=O)-$R^3$ bedeutet, wobei $R^3$ einen einwertigen linearen oder verzweigten aliphatischen oder einen cycloaliphatischen Kohlenwasserstoffrest oder einen einwertigen aromatischen Kohlenwasserstoffrest bedeutet, wobei das ausgewählte Silan oder gegebenenfalls die ausgewählten Silane in nicht hydrolysierter Form, in hydrolysierter Form oder in hydrolysierter und teilkondensierter oder hydrolysierter und kondensierter Form oder in einem Gemisch dieser Formen vorliegen können,

oder eine Zubereitung mehrerer solcher Siloxane der allgemeinen Formel (1) und / oder Silane der Formel (2) mit partikulären Feststoffen im wässrigen Milieu emulgiert werden, wobei der partikuläre Feststoff silylierte pyrogene Kieselsäure ist.

**11.** Verfahren zur Herstellung von Partikel nach Anspruch 10, **dadurch gekennzeichnet, dass** der Massenanteil der partikulären Feststoffe in der zur Emulgierung eingesetzten Dispersion zwischen 1 und 80 Gew.%, bezogen auf die Gesamtemulsion, liegt.

**12.** Verfahren zur Herstellung von Partikel nach Anspruch 10 oder 11, **dadurch gekennzeichnet, dass** in der Emulsion der Massenanteil der Ölphase 0,1 Gew.% bis 80 Gew.% und der Massenanteil der partikulären Feststoffe 0,1 Gew.% bis 20 Gew.% und der Massenanteil von Wasser 10 Gew.% bis 99,8 Gew.%, bezogen auf die Gesamtemulsion, ist.

**13.** Verfahren zur Herstellung von Partikeln nach einem oder mehreren der Ansprüche 10 bis 12, **dadurch gekennzeichnet, dass**

eine Ölphase enthaltend ein polyadditionsfähiges, polykondensationsfähiges oder polymerisierbares Siloxan der allgemeinen Formel(1) oder enthaltend ein polyadditionsfähiges, polykondensationsfähiges oder polymerisierbares Silan der allgemeinen Formel (2) polymerisiert und vernetzt wird.

**14.** Zusammensetzung oder Zubereitung, **dadurch gekennzeichnet, dass** sie Partikel nach einem oder mehreren der Ansprüche 1 bis 9 oder hergestellt nach dem Verfahren nach einem oder mehreren der Ansprüche 10 bis 13 enthält.

**15.** Oberflächenbeschichtung, **dadurch gekennzeichnet, dass** sie Partikel nach einem oder mehreren der Ansprüche 1 bis 9 oder hergestellt nach dem verfahren nach einem oder mehreren der Ansprüche 10 bis 13 aufweist.

16. Formkörper **dadurch gekennzeichnet, dass** er Partikel nach einem oder mehreren der Ansprüche 1 bis 9 oder hergestellt nach dem Verfahren nach einem oder mehreren der Ansprüche 10 bis 13 aufweist.

17. oberflächenbeschichtung nach Anspruch 15 oder Formkörper nach Anspruch 16, **dadurch gekennzeichnet, dass** diese eine Hydrophobie, mit einem Kontaktwinkel gemessen in Luft gegen Wasser von größer als 90°, aufweisen.

18. Fasermaterial, **dadurch gekennzeichnet, dass** es Partikel nach einem oder mehreren der Ansprüche 1 bis 9 oder hergestellt nach dem Verfahren nach einem oder mehreren der Ansprüche 10 bis 13 aufweist.

19. Textiles Flächengebilde, **dadurch gekennzeichnet, dass** es Partikel nach einem oder mehreren der Ansprüche 1 bis 9 oder hergestellt nach dem Verfahren nach einem oder mehreren der Ansprüche 10 bis 13 aufweist.

20. Gebäudebeschichtung, **dadurch gekennzeichnet, dass** sie Partikel nach einem oder mehreren der Ansprüche 1 bis 9 oder hergestellt nach dem Verfahren nach einem oder mehreren der Ansprüche 10 bis 13 aufweist.

## Claims

1. Particles comprising at least one polymerization product of a polyaddable, polycondensable or polymerizable siloxane and/or silane and a particulate solid, where the particulate solid is silylated fumed silica, where the mean particle size of the particulate solid is smaller than the mean particle size of the polymer particles without particulate solid and the particulate solid is bonded to the surface of the polymer particles.

2. Particles according to Claim 1, **characterized in that** they are at least one polymerization product of a polyaddable, polycondensable or polymerizable siloxane composed of repeat units of the general formula (1)

$$[A^1_z R^1_p SiO_{(4-p-z)/2}] \qquad (1),$$

where
$A^1$ is a hydrogen or hydrocarbon radical which contains up to 30 carbon atoms and can additionally contain heteroatoms selected from O, S, Si, Cl, F, Br, P or N atoms, such that $A^1$ can also be a functional group which is optionally itself unsubstituted or substituted,
$R^1$ is alkoxy or aryloxy radicals having up to 18 carbon atoms, hydroxy radicals or H, or which, independently of $A^1$, can have its meaning,
$z$ and $p$ are in each case the values 0, 1, 2 or 3 or consists of the polyaddition product, condensation product or the polymerization product of a polyaddable, condensable or polymerizable silane of the general formula (2),

$$(R^2)_{4-n} Si(OR^3)_n \qquad (2)$$

where $n$ is a number with a value of 1, 2, 3 or 4,
$R^2$ is linear or branched alkyl radicals having 1 to 16 carbon atoms, where nonadjacent carbon atoms can be replaced by oxygen atoms, or is aryl radicals or is an organofunctional radical selected from the group phosphonic acid monoester radical, phosphonic acid diester radical, phosphonic acid radical, methacryloyloxy radical, acryloyloxy radical, vinyl radical, mercapto radical, isocyanato radical, where the isocyanato radical can optionally be reaction-blocked to protect against chemical reactions, hydroxy radical, hydroxyalkyl radical, epoxy radical, glycidyloxy radical, morpholino radical, piperazino radical, a primary, secondary or tertiary amino radical with one or more nitrogen atoms, where the nitrogen atoms can be substituted by hydrogen or monovalent aromatic, aliphatic or cycloaliphatic hydrocarbon radicals, carboxylic acid radical, carboxylic anhydride radical, aldehyde radical, urethane radical, urea radical, where the radical $R^2$ can be bonded directly to the silicon atom or be separated therefrom by a carbon chain of 1-6 carbon atoms, and $R^3$ is a monovalent linear or branched aliphatic or cycloaliphatic hydrocarbon radical in which nonadjacent carbon atoms can be replaced by heteroatoms such as O, N, P, S, Cl, F, Br or Si, where the free valences of the heteroatoms in question may be saturated by linear or branched alkyl radicals or by hydrogen atoms, or is a monovalent aromatic hydrocarbon radical or a radical of the form $-C(=O)-R^3$ where $R^3$ is a monovalent linear or branched aliphatic or a cycloaliphatic hydrocarbon radical or a monovalent aromatic hydrocarbon radical, where the selected silane or optionally the selected silanes can be present in nonhydrolyzed form, in hydrolyzed form or in hydrolyzed and partially condensed or hydrolyzed and condensed form or in a mixture of these forms, or the polyaddition, condensation or polymerization product of a preparation has a plurality of such siloxanes of repeat units of the general formula (1) and/or silanes of the formula (2).

3. Particles according to Claim 2, **characterized in that** the repeat units of the general formula (1) are those which comprise at least 1% by weight, but not more than 60% by weight, of radicals $R^1$.

4. Particles according to Claim 2, **characterized in that** $R^1$ is a methoxy radical or ethoxy radical.

5. Particles according to Claim 1, **characterized in that** the silane is an alkylalkoxysilane.

6. Particles according to Claim 5, **characterized in that** the alkylalkoxysilane is an alkylalkoxysilane having 1, 2 or 3 alkoxy groups, where the alkyl groups are linear or branched C1-C18 alkyl radicals.

7. Particles according to Claim 6, **characterized in that** the alkyl radical is a methyl, ethyl, n-propyl or isooctyl radical and the alkoxy radical is a methoxy or ethoxy radical.

8. Particles according to Claim 1, **characterized in that** the silylated fumed silicas have a methanol number of less than 70.

9. Particles according to one or more of Claims 1 to 8, **characterized in that** the particles have a mean diameter of from 0.5 $\mu$m to 500 $\mu$m.

10. Method for producing particles, **characterized in that** an oil phase comprising at least one polyaddable, polycondensable or polymerizable siloxane of the general formula (1)

$$[A^1_z R^1_p SiO_{(4-p-z)/2}] \qquad (1),$$

where
$A^1$ is a hydrogen or hydrocarbon radical which contains up to 30 carbon atoms and can additionally contain heteroatoms selected from O, S, Si, Cl, F, Br, P or N atoms, such that $A^1$ can also be a functional group which is optionally itself unsubstituted or substituted,
$R^1$ is alkoxy or aryloxy radicals having up to 18 carbon atoms, hydroxy radicals or H, or which, independently of $A^1$, can have its meaning,
$z$ and $p$ are in each case the values 0, 1, 2 or 3
or at least one polyaddable, polycondensable or polymerizable silane of the general formula (2),

$$(R^2)_{4-n}\text{-Si-}(OR^3)_n \qquad (2)$$

where $n$ is a number with a value of 1, 2, 3 or 4,
$R^2$ is linear or branched alkyl radicals having 1 to 16 carbon atoms, where nonadjacent carbon atoms can be replaced by oxygen atoms, or is aryl radicals or is an organofunctional radical selected from the group phosphonic acid monoester radical, phosphonic acid diester radical, phosphonic acid radical, methacryloyloxy radical, acryloyloxy radical, vinyl radical, mercapto radical, isocyanato radical, where the isocyanato radical can optionally be reaction-blocked to protect against chemical reactions, hydroxy radical, hydroxyalkyl radical, epoxy radical, glycidyloxy radical, morpholino radical, piperazino radical, a primary, secondary or tertiary amino radical with one or more nitrogen atoms, where the nitrogen atoms can be substituted by hydrogen or monovalent aromatic, aliphatic or cycloaliphatic hydrocarbon radicals, carboxylic acid radical, carboxylic anhydride radical, aldehyde radical, urethane radical, urea radical, where the radical $R^2$ can be bonded directly to the silicon atom or can be separated therefrom by a carbon chain of 1-6 carbon atoms, and
$R^3$ is a monovalent linear or branched aliphatic or cycloaliphatic hydrocarbon radical in which nonadjacent carbon atoms can be replaced by heteroatoms such as O, N, P, S, Cl, F, Br or Si, where the free valences of the heteroatoms in question may be saturated by linear or branched alkyl radicals or by hydrogen atoms, or is a monovalent aromatic hydrocarbon radical or a radical of the form -C(=O)-$R^3$ where $R^3$ is a monovalent linear or branched aliphatic or a cycloaliphatic hydrocarbon radical or a monovalent aromatic hydrocarbon radical, where the selected silane or optionally the selected silanes may be present in nonhydrolyzed form, in hydrolyzed form or in hydrolyzed and partially condensed or hydrolyzed and condensed form or in a mixture of these forms,
or a preparation of a plurality of such siloxanes of the general formula (1) and/or silanes of the formula (2) are emulsified with particulate solids in aqueous medium, where the particulate solid is silylated fumed silica.

11. Method for producing particles according to Claim 10, **characterized in that** the mass fraction of the particulate solids in the dispersion used for the emulsification is between 1 and 80% by weight, based on the total emulsion.

**12.** Method for producing particles according to Claim 10 or 11, **characterized in that**, in the emulsion, the mass fraction of the oil phase is 0.1% by weight to 80% by weight and the mass fraction of the particulate solids is 0.1% by weight to 20% by weight and the mass fraction of water is 10% by weight to 99.8% by weight, based on the total emulsion.

**13.** Method for producing particles according to one or more of Claims 10 to 12, **characterized in that** an oil phase comprising a polyaddable, polycondensable or polymerizable siloxane of the general formula (1) or comprising a polyaddable, polycondensable or polymerizable silane of the general formula (2) is polymerized and crosslinked.

**14.** Composition or preparation, **characterized in that** it comprises particles according to one or more of Claims 1 to 9 or produced by the method according to one or more of Claims 10 to 13.

**15.** Surface coating, **characterized in that** it has particles according to one or more of Claims 1 to 9 or produced by the method according to one or more of Claims 10 to 13.

**16.** Molding, **characterized in that** it has particles according to one or more of Claims 1 to 9 or produced by the method according to one or more of Claims 10 to 13.

**17.** Surface coating according to Claim 15 or molding according to Claim 16, **characterized in that** it has a hydrophobicity with a contact angle measured in air toward water of greater than 90°.

**18.** Fiber material, **characterized in that** it has particles according to one or more of Claims 1 to 9 or produced by the method according to one or more of Claims 10 to 13.

**19.** Textile surface, **characterized in that** it has particles according to one or more of Claims 1 to 9 or produced by the method according to one or more of Claims 10 to 13.

**20.** Building coating, **characterized in that** it has particles according to one or more of Claims 1 to 9 or produced by the method according to one or more of Claims 10 to 13.

**Revendications**

**1.** Particules contenant au moins un produit de polymérisation d'un siloxane et/ou d'un silane apte à une polyaddition, apte à une polycondensation ou polymérisable et un solide particulaire, où le solide particulaire est une silice pyrogène silylée, où la grosseur moyenne des particules du solide particulaire est inférieure à la grosseur moyenne des particules polymères sans solide particulaire et le solide particulaire est lié à la surface des particules polymères.

**2.** Particules selon la revendication 1, **caractérisées en ce qu'**elles sont au moins un produit de polymérisation d'un siloxane apte à une polyaddition, apte à une polycondensation ou polymérisable, constitué d'unités répétitives de formule générale (1)

$$[A^1_z R^1_p SiO_{(4-p-z)/2}] \qquad (1),$$

où

A$^1$ signifie un radical d'hydrogène ou hydrocarboné, qui contient jusqu'à 30 atomes de carbone et qui peut en outre contenir des hétéroatomes choisis parmi des atomes d'O, de S, de Si, de Cl, de F, de Br, de P ou de N, de manière telle que A$^1$ peut également signifier un groupe fonctionnel, qui est le cas échéant lui-même non substitué ou substitué,
R$^1$ signifie des radicaux alcoxy ou aryloxy comprenant jusqu'à 18 atomes de carbone, des radicaux hydroxy ou H, ou peut avoir, la signification de A$^1$, indépendamment de celui-ci,
z et p signifient à chaque fois les valeurs 0, 1, 2 ou 3

ou constitué du produit de polyaddition, de condensation ou de polymérisation d'un silane apte à une polyaddition, apte à une condensation ou polymérisable de formule générale (2),

$$(R^2)_{4-n}Si(OR^3)_n \qquad (2)$$

où

n signifie un nombre de valeur 1, 2, 3 ou 4,

$R^2$ signifie des radicaux alkyle linéaires ou ramifiés comprenant 1 à 16 atomes de carbone, où des atomes de carbone non adjacents peuvent être remplacés par des atomes d'oxygène, ou signifie des radicaux aryle ou représente un radical organofonctionnel, choisi dans le groupe constitué de : radical monoester de l'acide phosphonique, radical diester de l'acide phosphonique, radical acide phosphonique, radical méthacryloyloxy, radical acryloyloxy, radical vinyle, radical mercapto, radical isocyanato, où le radical isocyanato peut le cas échéant être bloqué en réaction pour la protection contre des réactions chimiques, radical hydroxy, radical hydroxyalkyle, radical époxy, radical glycidyloxy, radical morpholino, radical pipérazino, un radical amino primaire, secondaire ou tertiaire comprenant un ou plusieurs atomes d'azote, où les atomes d'azote peuvent être substitués par hydrogène ou des radicaux hydrocarbonés monovalents aromatiques, aliphatiques ou cycloaliphatiques, radical acide carboxylique, radical anhydride d'acide carboxylique, radical aldéhyde, radical uréthane, radical urée, où le radical $R^2$ peut être lié directement à l'atome de silicium ou être séparé de celui-ci par une chaîne carbonée de 1-6 atomes de carbone, et $R^3$ signifie un radical hydrocarboné monovalent aliphatique linéaire ou ramifié ou cycloaliphatique, dans lequel des atomes de carbone non adjacents peuvent être remplacés par des hétéroatomes tels que O, N, P, S, Cl, F, Br ou Si, où les valences libres des hétéroatomes concernés peuvent être saturées par des radicaux alkyle linéaires ou ramifiés ou par des atomes d'hydrogène ou signifie un radical hydrocarboné aromatique monovalent ou un radical de forme $-C(=O)-R^3$, où $R^3$ signifie un radical hydrocarboné monovalent aliphatique linéaire ou ramifié ou cycloaliphatique ou un radical hydrocarboné monovalent aromatique, où le silane choisi ou le cas échéant les silanes choisis peut(peuvent) se trouver sous forme non hydrolysée, sous forme hydrolysée ou sous forme hydrolysée et partiellement condensée ou sous forme hydrolysée et condensée ou dans un mélange de ces formes,

ou présente le produit de polyaddition, de condensation ou de polymérisation d'une préparation, de plusieurs de ces siloxanes constitués d'unités répétitives de formule générale (1) et/ou de silanes de formule (2).

3. Particules selon la revendication 2, **caractérisées en ce que** les unités répétitives de formule générale (1) sont des unités qui contiennent au moins 1% en poids, cependant pas plus de 60% en poids de radicaux $R^1$.

4. Particules selon la revendication 2, **caractérisées en ce que** $R^1$ signifie un radical méthoxy ou éthoxy.

5. Particules selon la revendication 1, **caractérisées en ce que** le silane est un alkylalcoxysilane.

6. Particules selon la revendication 5, **caractérisées en ce que** l'alkylalcoxysilane est un alkylalcoxysilane comprenant 1, 2 ou 3 groupes alcoxy, où les groupes alkyle sont des radicaux $C_1$-$C_{18}$-alkyle linéaires ou ramifiés.

7. Particules selon la revendication 6, **caractérisées en ce que** le radical alkyle est un radical méthyle, éthyle, n-propyle ou isooctyle et le radical alcoxy est un radical méthoxy ou éthoxy.

8. Particules selon la revendication 1, **caractérisées en ce que** les silices pyrogènes silylées présentent un indice de méthanol inférieur à 70.

9. Particules selon l'une ou plusieurs des revendications 1 à 8, **caractérisées en ce que** les particules présentent un diamètre moyen de 0,5 $\mu$m à 500 $\mu$m.

10. Procédé pour la préparation de particules, **caractérisé en ce qu'**on émulsionne une phase huileuse contenant au moins un siloxane apte à une polyaddition, apte à une polycondensation ou polymérisable de formule générale (1)

$$[A^1_z R^1_p SiO_{(4-p-z)/2}] \qquad (1),$$

où

$A^1$ signifie un radical d'hydrogène ou hydrocarboné, qui contient jusqu'à 30 atomes de carbone et qui peut en outre contenir des hétéroatomes choisis parmi des atomes d'O, de S, de Si, de Cl, de F, de Br, de P ou de N, de manière telle que $A^1$ peut également signifier un groupe fonctionnel, qui est le cas échéant lui-même non substitué ou substitué,

$R^1$ signifie des radicaux alcoxy ou aryloxy comprenant jusqu'à 18 atomes de carbone, des radicaux hydroxy ou H, ou peut avoir la signification de A$^1$, indépendamment de celui-ci,

z et p signifient à chaque fois les valeurs 0, 1, 2 ou 3

ou au moins un silane apte à une polyaddition, apte à une polycondensation ou polymérisable de formule générale (2)

$$(R^2)_{4-n}\text{-Si-}(OR^3)_n \qquad (2)$$

où

n signifie un nombre de valeur 1, 2, 3 ou 4,

R$^2$ signifie des radicaux alkyle linéaires ou ramifiés comprenant 1 à 16 atomes de carbone, où des atomes de carbone non adjacents peuvent être remplacés par des atomes d'oxygène, ou des radicaux aryle ou représente un radical organofonctionnel, choisi dans le groupe constitué de : radical monoester de l'acide phosphonique, radical diester de l'acide phosphonique, radical acide phosphonique, radical méthacryloyloxy, radical acryloyloxy, radical vinyle, radical mercapto, radical isocyanato, où le radical isocyanato peut le cas échéant être bloqué en réaction pour la protection contre des réactions chimiques, radical hydroxy, radical hydroxyalkyle, radical époxy, radical glycidyloxy, radical morpholino, radical pipérazino, un radical amino primaire, secondaire ou tertiaire comprenant un ou plusieurs atomes d'azote, où les atomes d'azote peuvent être substitués par hydrogène ou des radicaux hydrocarbonés monovalents aromatiques, aliphatiques ou cycloaliphatiques, radical acide carboxylique, radical anhydride d'acide carboxylique, radical aldéhyde, radical uréthane, radical urée, où le radical R$^2$ peut être lié directement à l'atome de silicium ou être séparé de celui-ci par une chaîne carbonée de 1-6 atomes de carbone, et

R$^3$ signifie un radical hydrocarboné monovalent aliphatique linéaire ou ramifié ou cycloaliphatique, dans lequel des atomes de carbone non adjacents peuvent être remplacés par des hétéroatomes tels que O, N, P, S, Cl, F, Br ou Si, où les valences libres des hétéroatomes concernés peuvent être saturées par des radicaux alkyle linéaires ou ramifiés ou par des atomes d'hydrogène ou signifie un radical hydrocarboné aromatique monovalent ou un radical de forme -C(=O)-R$^3$, où R$^3$ signifie un radical hydrocarboné monovalent aliphatique linéaire ou ramifié ou cycloaliphatique ou un radical hydrocarboné monovalent aromatique, où le silane choisi ou le cas échéant les silanes choisis peut(peuvent) se trouver sous forme non hydrolysée, sous forme hydrolysée ou sous forme hydrolysée et partiellement condensée ou sous forme hydrolysée et condensée ou dans un mélange de ces formes,

ou une préparation de plusieurs de ces siloxanes de formule générale (1) et/ou silanes de formule (2) avec des solides particulaires en milieu aqueux, où le solide particulaire est une silice pyrogène silylée.

**11.** Procédé pour la préparation de particules selon la revendication 10, **caractérisé en ce que** la proportion en masse des solides particulaires dans la dispersion utilisée pour l'émulsion est située entre 1 et 80% en poids, par rapport à la totalité de l'émulsion.

**12.** Procédé pour la préparation de particules selon la revendication 10 ou 11, **caractérisé en ce que** dans l'émulsion, la proportion en masse de la phase huileuse représente 0,1% en poids à 80% en poids et la proportion en masse des solides particulaires représente 0,1% en poids à 20% en poids et la proportion en masse d'eau représente 10% en poids à 99,8% en poids, par rapport à la totalité de l'émulsion.

**13.** Procédé pour la préparation de particules selon l'une ou plusieurs des revendications 10 à 12, **caractérisé en ce qu'**une phase huileuse, contenant un siloxane apte à une polyaddition, apte à une polycondensation ou polymérisable de formule générale (1) ou contenant un silane apte à une polyaddition, apte à une polycondensation ou polymérisable de formule générale (2) est polymérisée et réticulée.

**14.** Composition ou préparation, **caractérisée en ce qu'**elle contient des particules selon l'une ou plusieurs des revendications 1 à 9 ou préparées selon le procédé selon l'une ou plusieurs des revendications 10 à 13.

**15.** Revêtement de surface, **caractérisé en ce qu'**il présente des particules selon l'une ou plusieurs des revendications 1 à 9 ou préparées selon le procédé selon l'une ou plusieurs des revendications 10 à 13.

**16.** Corps moulé **caractérisé en ce qu'**il présente des particules selon l'une ou plusieurs des revendications 1 à 9 ou préparées selon le procédé selon l'une ou plusieurs des revendications 10 à 13.

**17.** Revêtement de surface selon la revendication 15 ou corps moulé selon la revendication 16, **caractérisé en ce qu'**ils présentent une hydrophobie d'un angle de contact mesuré dans l'air par rapport à l'eau supérieur à 90°.

**18.** Matériau fibreux, **caractérisé en ce qu'**il présente des particules selon l'une ou plusieurs des revendications 1 à 9 ou préparées selon le procédé selon l'une ou plusieurs des revendications 10 à 13.

**19.** Structure plane, textile, **caractérisée en ce qu'**elle présente des particules selon l'une ou plusieurs des revendications 1 à 9 ou préparées selon le procédé selon l'une ou plusieurs des revendications 10 à 13.

**20.** Revêtement de bâtiment, **caractérisé en ce qu'**il présente des particules selon l'une ou plusieurs des revendications 1 à 9 ou préparées selon le procédé selon l'une ou plusieurs des revendications 10 à 13.

Fig. 1

2 μm

Fig. 2

1.0 μm

## IN DER BESCHREIBUNG AUFGEFÜHRTE DOKUMENTE

**In der Beschreibung aufgeführte Patentdokumente**

- US 3354022 A
- EP 0909747 A1
- EP 0772514 A
- DE 10063739
- WO 02064266 A
- DE 10233829 A1
- EP 0933388 A2
- EP 0433727 A1
- US 20030044612 A1
- EP 0941761 A2
- EP 1433749 A1